# EUROPÄISCHE PATENTANMELDUNG

(11) **EP 2 367 143 A1**
(43) Veröffentlichungstag der Anmeldung: **21.09.2011**
(21) Anmeldenummer: 10001967.8
(22) Anmeldetag: 25.02.2010
(51) Int. Cl.: G06Q 10/00, G06Q 30/00

(54) **Social advertise technology (So-ad-tec) System und Verfahren zum Werben von und in Dokumenten, als auch weitere Systeme und Verfahren für den Zugriff, die Strukturierung und die Auswertung von Dokumenten**

(71) Anmelder: Frey, Tim, 74855 Hassmersheim (DE)
(72) Erfinder: Frey, Tim, 74855 Hassmersheim (DE)

(57) **Zusammenfassung**

In der Ausführungsform nach Patentanspruch 1 weist die Erfindung auf:
a. Eine Zugriffseinheit (130) , die dazu ausgebildet ist, zumindest einen Zugriff zu verarbeiten, wobei ein solcher Zugriff Mittel enthalten kann, die dazu dienen, auf Informationen zumindest eines Schemas (120) oder daraus ableitbaren Informationen oder das Schema (120) oder dessen Struktur selbst zuzugreifen;
b. wobei ein So-ad-tec System (100) dazu ausgebildet ist, Werbung und weitere damit assoziierte oder zugehörige Informationen, in zumindest einem Schema (120) zu verwalten.

Die vorliegende Erfindung stellt somit ein System dar, mit dessen Hilfe strukturiert auf Werbung zugegriffen werden kann. Dabei wird das Konzept von Schemata (120), in denen Werbung strukturiert werden kann, eingeführt. Es können Informationen über Werbung mit weiteren Daten darin kombiniert werden. Ein solches Schema (120) ermöglicht es, jederlei Beziehungen, in Bezug auf Werbung und weitere Informationen zu strukturieren. Dabei ist die Möglichkeit gegeben, dass Werbende einfach und flexibel neue Informationen hinterlegen können.

## Beschreibung

### 1. Technisches Gebiet

Die vorliegende Erfindung betrifft ein System und Verfahren zur Werbung für und in Dokumenten und zum Assoziieren von Produkten in oder zu Dokumenten. Zusätzlich umfassen die offenbarten Techniken, Systeme und Verfahren der Erfindung auch Einsatzgebiete, die im Bezug für den generellen Zugriff auf Dokumente oder Systeme und der Strukturierung und Assoziation von Wissen verwendet werden können.

### 2. Stand der Technik

Derzeit existieren viele Plattformen und Suchmaschinen im Internet, die ihre Gewinne durch das Einblenden von Werbung erzielen. Daher ist es erstrebenswert, treffsicher Werbung einzublenden, die den Benutzer auch interessiert, um letztendlich die Wahrscheinlichkeit auf eine positive Resonanz des Benutzers zu erhöhen. Heutzutage ist das Internet zudem hochdynamisch. Zum Beispiel können an vielen Stellen Inhalte von Benutzern verändert, hinzugefügt oder gelöscht werden. Auch können verschiedene Ressourcen von verschiedenen Benutzern unterschiedlich wahrgenommen werden. Somit gilt es als Herausforderung auch diesen Umstand im Bezug auf Werbung zu beachten.

Facebook (http://www.facebook.com/) ist eine Internetplattform, genauer spezifiziert ein Social Network, das es erlaubt, Bildern Tags hinzuzufügen. Dabei sollen sich solche Tags auf Personen beziehen. Sofern als Tag ein Wort eingegeben wird, das zu keiner Person passt, erscheint eine Aufforderung, die zu der Person passende E-Mail Adresse einzugeben. Dies wird auch oftmals als "Personen verlinken" bezeichnet. Ähnlich wie Facebook sind Studivz (http://www.studivz.net/), Meinvz (hLtp://www.meinvz.net/), Wer-kennt-wen (http://www.wer-kennt-wen.de/) und andere Social Networks aufgebaut. Werbung wird dabei oftmals am Rand eigeblendet, wobei diese sich nicht auf den Inhalt der Seite, die gerade besucht wird, bezieht. Bei Facebook ist die Möglichkeit vorhanden, dass Unternehmen oder politische Persönlichkeiten ein Profil anlegen und Benutzer davon Fans werden können. Dabei ist es aber nicht möglich, diese "speziellen Profile" als virtuelle Personen zu verlinken.

Flickr (http://www.ftickr.com) ist eine Internetplattform, die es ermöglicht, Fotos hochzuladen und zu bearbeiten. Dabei ist es möglich, Bereiche in Fotos zu markieren und Kommentare hinzuzufügen. Nachteil hierbei ist, dass keine Produkte "verlinkt" werden können.

US 2008/0126226 A1 (http://www.mirriad.com/) beansprucht eine Methode, um Videos zur Verteilung vorzubereiten, wobei die Videos analysiert werden, um Platzierungszonen zu definieren, auf denen Werbung platziert werden kann. Durch diese Platzierungszonen ist es möglich, neue Werbung in Videos einfließen zu lassen. Das Problem, logisch zu dem Kontext des Videos passende Werbung einfließen zu lassen, wird dadurch jedoch nicht gelöst.

US 2008/0086368 A1 ist ein System und Verfahren zur standort- und inhaltsbezogenen Onlinewerbung. Dabei wird ein Verfahren zum Bestimmen des Werbungskontextes, aufgrund von empfangenen Inhalten, dem Bestimmen einer geographischen Region, und dem Bestimmen einer Anzeige, die dem Werbungskontext zugeordnet ist und deren Einzeichnen in einer, aufgrund der geographischen Region bestimmbaren Karte, mit einem Marker, beansprucht. Der Nachteil bei diesem Verfahren ist, dass es rein aufgrund der Inhalte entschieden wird, welche Werbung zugeordnet wird. Dies verhindert es, Rückschlüsse über Klassifikationen zu erkennen und aufgrund derer, Werbung zuzuordnen. Zum Beispiel kann die Information, dass ein Skihelm ein Teil einer Skiausrüstung ist, beim Zuordnen nicht genutzt werden. Zudem wird durch die Bestimmung eines Inhaltes die Tatsache vernachlässigt, dass Dokumente oftmals in mehreren Kontexten stehen. Das Verfahren ist hierbei aber auf ein einmaliges Empfangen von Inhalt ausgelegt. Es vernachlässigt die Tatsache, dass oft mehrmaliges Empfangen von Inhalt sinnvoll sein könnte. Zusätzlich ist es nicht möglich, die Inhaltsinformationen in weiteren empfangenen Inhalten zu nutzen. Ein weiteres Problem ist, dass ein Kontext genau einer Anzeige zugeordnet ist und nicht mehreren. Dies verhindert es, mehrere Anzeigen, die zu dem Inhalt passen zu bewerten und zu bestimmen, welche davon am besten passt.

WO2004/029758 a2 ist ein Verfahren für die Relevanzbeurteilung von Werbung zum Inhalt eines Dokumentes, aufgrund der zuvorgehenden Analyse der Inhalte der Werbung und des Dokumentes und den Vergleich, der bei der Analyse bestimmten Themen. Dadurch, dass ein Thema so allgemein gestrickt ist, kann dies zum Beispiel bei einem Dokument, in dem über einen Skoda Oktavia mit seinen vier Rädern und Felgen berichtet wird dazu führen, dass auch Anzeigen von anderen Autos als relevant erachtet werden, da diese auch viele Themen des Dokumentes besitzen, wie zum Beispiel Auto, Räder oder Felgen. Deutliche Auswirkungen dieser Problematik sind damit für den Werbenden zu sehen. Es kann sein, dass bei einem Artikel über eines seiner Produkte, eine Anzeige eines Konkurrenzproduktes auftaucht. Dadurch, dass die Themen in keiner Beziehung stehen, ist es heutzutage nur möglich, einzelne Wörter auszuschließen. Diese Werbeform oder ähnliche werden auch oftmals als Keyword-Advertising bezeichnet.

US 2009/0171748 A1 beschreibt wie Produktdaten und Daten in Sozialnetzwerken benutzt werden können, um Onlinewerbung zu verbesseren. Dazu wird aufgrund der Anfrage einer Benutzerschnittstelle ein Inhaltsobjekt, das angezeigt wird bestimmt und ausgeliefert. Dieses wird zumindest aufgrund einer Kategorie, zu welcher der Benutzer im Bezug auf ein Sozialnetzwerk und auf einen Produkttyp gehört, bestimmt. Wobei jede Kategorie für eine Stellung in dem Sozialnetzwerk und Aktivitäten des Benutzers in Verbindung mit dem Produkttyp steht.

Diese Erfindung löst jedoch nicht das Problem, zu dem aktuell angezeigten Inhalt, zugehörige Werbung einblenden zu können. Vielmehr geht es darum, aufgrund der Stellung des Benutzers im Sozialnetzwerk ein passendes Produkt zu finden und nicht Produkte zu bestimmen, die zum aktuell angezeigten Inhalt passen. Es wird somit die Tatsache vernachlässigt, dass dem Inhalt zugehörige Werbung weitaus besser wirkt.

US 2009/0171763 A1 beschreibt eine Werbungsanforderungsmaschine, die Werbung auswählt, die für den Benutzer vorhergesagt interessant sein könnte. Diese Vorhersage basiert auf einer Speichereinheit, in der eine Vielzahl von Werbungen gespeichert werden, die vorhergesagt von Interesse für einen Benutzer waren. Dies geschieht aufgrund einer Übereinstimmung mit der Vielzahl der zuvor ausgelieferten Werbungen. Die Einschränkung hierbei ist, dass die Vorhersage nur aufgrund vorher ausgelieferter Werbungen und nicht aufgrund von Inhalten, die der Benutzer betrachtet, stattfindet.

US 2008/0092159 A1 beschreibt ein Verfahren zur Zielwerbung von Videos. Dabei wird ein Werbeartikel zur Anzeige übertragen, und es wird festgestellt, ob dieser Werbeartikel übersprungen wurde. Dadurch wird das Profil des Zusehers aktualisiert, und es wird darin gespeichert, ob der Werbeartikel übersprungen wurde oder nicht. Nachteil dieses Verfahrens ist, dass nicht im Bezug auf die beworbene Produktgruppe gespeichert wird, welche Werbeartikel den Benutzer nicht interessieren. Ein weiteres Problem dabei ist, dass die Information des Überspringens nicht mit weiteren Informationen kombiniert wird. Erst nach dem Überspringen kann die Werbung als übersprungen oder nicht übersprungen eingeteilt werden, und es erfolgt keine Vorhersage für das Überspringen.

Semantic advertising ist das semantische Analysieren des Inhaltes von Dokumenten im Internet und das Anzeigen von semantisch zugehöriger Werbung zu dem Inhalt. Bisher wird durch Sprachanalyse und maschinelles Lernen versucht, den semantischen Inhalt von Dokumenten zu erfassen. Zum Beispiel von http://www.peer39.com/ oder ISense (http://www.isense.net/). ISense verfolgt dabei das Ziel, eine Webseite und deren Inhalt zu verstehen und zu analysieren. Um dies zu bewerkstelligen verfügt ISense über eine Ontologie, die es ermöglicht, eine Webseite in eine von 3000 verschiedenen Kategorien einzuordnen. Ein Problem dieser semantischen Lösungen ist, dass nicht beachtet wird, dass die Benutzer verschieden sind und Inhalte subjektiv aufgefasst werden. Des Weiteren hat der Werbende nicht die Möglichkeit, selbst sein Produkt, bzw. seine Anzeige zu klassifizieren und in das System einzuordnen. Außerdem wird die Website, anhand des Schemas analysiert und nicht die Werbung an sich selbst. Ein weiteres Problem dieser Verfahren und Apparate ist, dass diese langsam sind und mit hochkomplexen Schemen arbeiten. Es wird dabei darauf gesetzt, alles zu verstehen und nicht die Inhalte, die relevant für den Benutzer sind. Zusätzlich ist die eine hinterlegte Ontologie absolut. Es wird die Tatsache außer Acht gelassen, dass Benutzer eine verschiedene Wahrnehmung haben können.

US7617121 B1 (Intellitxtsm von http://www.vibrantmedia.com) beschreibt einen Apparat, der Hyperlinks, die auf Werbung zeigen, zu verschiedenen Wörtern in einem Inhalt hinzufügt. Ein Problem dieser Lösung ist, dass der Hyperlink nur aufgrund eines oder mehrerer Wörter, die vom Werbenden ausgewählt wurden, erzeugt wird. Es ist dabei keine komplexe Zuordnung zu Kategorien hinterlegt.

US 2007/0124208 A1 beschreibt ein System und Verfahren, um Daten zu taggen. Dabei werden Klassifikationsdaten in einem verteilten Computersystem gesammelt, wobei zumindest ein Teil der Klassifikationsdaten Inhalt klassifiziert. Aufgrund der Klassifikation wird dann der Inhalt verarbeitet. Nachteil dieser Lösung ist, dass die Klassifikationsdaten nicht dazu genutzt werden, um Werbung dem Inhalt zuzuordnen. Des Weiteren werden die Klassifikationsdaten nicht benutzt. um Rückschlüsse über den Inhalt zu bilden.

WO 2004/079522 beschreibt die Identifizierung von auf einen bestimmten Inhalt bezogenen Informationen und/oder Präsentation von Bezugsinformationen in Zusammenhang mit inhaltsbezogenen Werbungen. Dabei wird Dokumenteninformation benutzt, um zusätzlichen Inhalt des Dokumentes zu bestimmen, um zumindest mit einem Teil des Dokumenteninhaltes mit dem bestimmten Inhalt zur Präsentation für den Benutzer zu kombinieren, wobei das Dokument zumindest eine Werbung ist. Es kann nur die Werbung für ein Dokument bestimmt werden und nicht für mehrere. Zudem wird die Dokumenteninformation nur empfangen. Es bleibt ungelöst, wie die Dokumenteninformation erstellt wird und wie somit semantisch zu dem Dokument passende Werbung eingebunden werden kann. Zusätzlich ist die bestimmte Werbung rein zu Präsentationszwecken verwertbar. Dies ist eine große Einschränkung, da nur die Präsentation als Ziel genannt wird. Hierbei ist die Problematik zudem, dass der Inhalt keine direkten Auswirkungen auf die Präsentation hat, d.h., dass aufgrund des Inhaltes nicht die Art der Präsentation geändert werden kann, zum Beispiel durch bestimmte Wörter, durch die Werbung anders grafisch aufbereitet oder ausgewählt wird, zum Beispiel als Bild oder als Video.

US 2008/0086356 A1 beschreibt eine computerimplementierte Methode, um die Relevanz einer Nachfrage nach Werbung zu bestimmen. Dabei wird kartenbasierte Standortinformation, die mit der Anfrage verknüpft ist, mit Zielstandortinformationen der Werbung verglichen und daraus die Relevanz, aufgrund von zumindest einer Werbung aus dem Vergleich von Karten und zielbasierter Standortinformation, bestimmt. Die Einschränkung dieser Methode ist, dass direkt Standortinformationen übertragen werden müssen. Es ist nicht möglich, indirekt mit einem Standort assoziierte Informationen zu übertragen und daraus in dem Verfahren selbst die Standortinformationen zu bestimmen. Beispielsweise Verweise auf Bilder, die an einem gewissen Standort aufgenommen wurden. Oder auch ein Produkt, das an bestimmen Standorten kaufbar ist. Nachteil dieser Lösung ist, dass die Erfindung nicht über die Mittel verfügt, Standortinformationen mit weiteren Daten direkt logisch in Verbindung zu bringen.

EP 1567961 stellt ein Verfahren und System zur Bereitstellung einer Werbeauflistungsvarianz bei Verteilungszuführungen über das Internet zur Maximierung des Umsatzes für den Werbungsverteiler dar. Dabei ermöglicht es das Werbeverteilsystem Werbenden einen Hyperlink und ein damit verbundenes Gebot, das der Werbende bei der Auswahl durch einen Benutzer zahlt zu bestimmen. Zudem kann das Werbeverteilsystem die Werbung aufgrund der Ertragseffizienz zu steigern. Das Werbeverteilsystem enthält dabei Mittel, um zumindest eine Werbung zu erhalten, die mit einem speziellen Verteilungsthema und einem Gebot, das pro Klick bei der Auslieferung spezifiziert ist. Zudem enthält es Mittel zur Ausgabe geordneter Werbungslisten über das Internet, wobei die Werbungsliste aus einer Vielzahl von Anzeigen besteht. Zudem wird eine solche Liste durch Bewertungsmittel für eine Auslieferung, anhand eines Verteilungsthemas, durch die Ertragseffizienz der Klickrate geordnet. Diese Erfindung besitzt den Nachteil, dass die Werbung nicht in ein komplexes Kategorieschema eingeordnet wird. Es werden zum Beispiel dabei keine Hierarchien von Spezialisierungen festgelegt. Dadurch ist es nicht möglich, Themen zu generalisieren und dazu passende Werbung zu bestimmen. Eine weitere Einschränkung ist, dass nicht der konkrete Benutzer in Bezug auf die Werbung beachtet wird, da die Interessen der Benutzer verschieden sein können.

EP 1547118 offenbart ein Verfahren und System zur Bereitstellung gefilterter und/oder maskierter Werbungen über das Internet. Dabei verfügt das System über Mittel eine Anfrage nach Werbungslisten, aufgrund eines Nachfragebegriffes zu empfangen und einen Filter, der angewandt werden kann, um Werbungslisten, aufgrund spezifischer Merkmale, auszuschließen. Die Mittel zum Filtern dienen dazu, Werbungslisten aus einer Datenbank potentieller Werbungslisten, die mit dem Nachfragebegriff verknüpft sind, aufgrund spezifischer Merkmale auszuschließen, um eine gefilterte Menge von Werbungslisten zu erzeugen. Zusätzlich verfügt das System über ein Werbungslistenauslieferungsmittel, das eine oder mehrere Werbungslisten, aufgrund der gefilterten Menge, ausliefern kann. Nachteil dieser Lösung ist, dass kein Ausschluss von Werbungen aufgrund von Kategorien von Werbungen stattfinden kann. Eine weitere Einschränkung ist, dass ein solches System nur einen Nachfragebegriff verarbeiten kann.

EP 1522034 Bereitstellung von Werbung durch inhaltsbezogene Knoten über das Internet offenbart ein Internetwerbungssystem, dass Werbungsinformationen von Werbenden zur Veröffentlichung durch ein hierarchisches, inhaltsbezogenes Mehrknotensystem empfängt. Dabei besitzt dieses System Empfangsmittel, die Werbungslisteninformationen erhalten können. Durch dieses Empfangsmittel kann einer oder mehrere Knoten ausgewählt werden, mit denen Werbung verknüpft werden soll. Zusätzlich wird die Höhe eines damit assoziierten Gebotes angegeben. Aufgrund von Publikationsmitteln können Endbenutzer einen speziellen Knoten abrufen, wobei der Inhalt des Knotens und die entsprechenden, mit dem Knoten assoziierten, Werbungen ausgeliefert werden. Nachteil dieser Erfindung ist, dass die Werbung in eine rein hierarchischen Struktur eingegliedert ist. Dies macht es unmöglich, Knoten aufzudecken, die dem derzeitigen Inhalt ähnlich sind, um verwandte Werbung aufzudecken. Des Weiteren besitzt ein solches System eine Hierarchie und nicht mehrere. Oftmals ist aber die Wahrnehmung von Menschen verschieden, und sie würden eine Hierarchie anders aufbauen. Durch die Limitation auf eine Hierarchie und damit, dass die unterschiedliche Wahrnehmung von verschiedenen Benutzern nicht beachtet wird, ergeben sich weitere Einschränkungen.

US 2006/0242013 A1 beschreibt ein Verfahren, um Zielinformationen für Werbung vorzuschlagen. Dabei wird zuerst eines oder mehrere Schlüsselwörter akzeptiert und eine oder mehrere Taxonomiekategorien durch zumindest ein Schlüsselwort bestimmt. Eine Einschränkung bei dieser Erfindung ist die Begrenzung auf Worte. Beispielswiese kann kein Bildausschnitt zum Vorschlag einer Taxonomiekategorie führen, oder bei einem Schüsselwort die Antwort darstellen. Ein weiteres Problem ist, dass nicht ähnliche Taxonomiekategorien bestimmt werden können.

Der vorliegenden Erfindung liegt daher das technische Problem zugrunde, ein System und ein Verfahren bereitzustellen, mit dem auf Werbung und zugehörige Informationen strukturiert, flexibel und benutzerzentriert zugegriffen und kombiniert werden kann, um die oben angesprochenen Nachteile zu überwinden.

### 3. Zusammenfassung der Erfindung

Dieses Problem wird gemäß einem ersten Aspekt der Erfindung durch ein So-ad-tec System für den Zugriff auf Werbung gelöst. In der Ausführungsform nach Patentanspruch 1 weist ein So-ad-tec System auf:
a. Eine Zugriffseinheit, die dazu ausgebildet ist, zumindest einen Zugriff zu verarbeiten, wobei ein solcher Zugriff Mittel enthalten kann, die dazu dienen, auf Informationen zumindest eines Schemas oder daraus ableitbaren Informationen oder das Schema oder dessen Struktur selbst zuzugreifen;
b. wobei ein So-ad-tec System dazu ausgebildet ist, Werbung und weitere damit assoziierte oder zugehörige Informationen, in zumindest einem Schema zu verwalten.

Demnach stellt die vorliegende Erfindung ein So-ad-tec System dar, mit dessen Hilfe strukturiert auf Werbung zugegriffen werden kann. Ein Zugriff kann hierbei das Schreiben, Lesen oder das Auswerten/Bestimmen von Informationen aus dem Schema, auch in Kombination mit Daten aus dem Zugriff bedeuten. Aufgrund der Komplexität von Werbung und damit assoziierten Informationen ist es derzeit nicht möglich, strukturiert und oder logisch im Zusammenhang mit weiteren Informationen, wie zum Beispiel Benutzer oder Kontextdaten zuzugreifen, da diese Daten in verschiedenen Systemen verteilt sein können (zum Beispiel in einem Computernetzwerk, wie dem Internet, in dem sich unzählige Social Networks befinden). Daher führt die vorliegende Erfindung das Konzept von Schemata, in denen Werbung strukturiert werden kann, ein. Dies ermöglicht es, dass Informationen über Werbung in einem So-ad-tec System flexibel hinterlegt und mit weiteren Daten kombiniert werden können. Ein solches Schema ermöglicht es jederlei Beziehungen, auch komplexe, in Bezug auf Werbung und weiteren Informationen zu strukturieren. Dabei ist die Möglichkeit gegeben, dass Werbende einfach und flexibel neue Informationen, wie zum Beispiel Kategorien, oder Anzeigen und Gebote oder Rückschlussregeln hinterlegen können. Zusätzlich ermöglicht ein solches Schema auch Informationen, im Bezug auf Anfragen und/oder Auswertungen und weiteren Eingabeinformationen zu hinterlegen.

Die Struktur der Werbung ist zudem nicht wie aus dem Stand der Technik fest vorgegeben und unveränderbar. Vielmehr kann durch ein solches Schema die logische Struktur, in der sich ein Produkt befindet, erfasst werden. Zudem ist es möglich, Informationen zu hinterlegen, die spezifizieren, mit welchen weiteren Informationen auch anderen Produkten, ein Produkt auftauchen soll oder kann oder als Werbung auftauchen soll.

Im Gegensatz zum Stand der Technik sind auch nicht die Auswertungsregeln fest vorgegeben, wie passende Werbung bestimmt werden soll. Heutzutage ist immer genau eine Auswertungsregel vorgegeben. Ein So-ad-tec System ist hierbei flexibler. In einem So-ad-tec System können mehrere Regeln hinterlegt sein und kombiniert werden. Auch kann ein Werbetreibender derzeit nicht unterscheiden, ob er als Bezugsquelle oder als eine Marke darstellt. Beispielsweise ein Automobilhersteller ist eine Marke, die keine Bezugsquelle darstellt. Ein Schema löst solche Probleme.

Ein weiterer Vorteil ist, dass ein So-ad-tec System nicht auf eine Medienform der Werbung als Quelle oder als Ziel festgelegt ist. Vielmehr können verschiedene Arten von Werbung genutzt werden, wie Text, Bilder, Videos oder Audio und andere Arten von Dokumenten und der Darstellung sind denkbar.

Diese vielen neuen Möglichkeiten ermöglichen eine besonders effiziente und zielsichere Auslieferung von Werbung. Es ist so erstmals möglich, eine Vielzahl von Informationen zu beachten und diese auch in Beziehung zu setzen und nicht wie bekannt, nur eine Informationsart. Es ist nun möglich, die verschiedenen Informationen miteinander zu verbinden, wie zum Beispiel Benutzerprofile, Kontextdaten und die Struktur der Werbung.

In einem weiteren Aspekt der vorliegenden Erfindung kann ein So-ad-tec System über eine Speichereinheit verfügen, die es ermöglicht, empfangene Informationen zu speichern oder in ein Schema zu integrieren. Dabei kann der Speicher auch über mehrere Systeme verteilt sein. Eine weitere Besonderheit ist, dass hier nicht nur Anzeigen hinterlegt werden können, sondern vielmehr auch noch weitere Informationen. Zum Beispiel Kategorien, Regeln und/oder weitere komplexe Strukturen.

Durch die Speichereinheit sind weitere Anwendungsfälle möglich. So kann ein So-ad-tec System über Mittel verfügen, die es erlauben, Daten aus der Speichereinheit zu verwerten. Beispielsweise können in diesen Daten Informationen über vergangene Zugriffe oder Operationen abgelegt werden. Die Mittel zum Verwerten dieser Daten können zum Beispiel dazu genutzt werden, um zu bestimmen, welche Anzeigen am Besten zu Zugriffsdokumenten, auch aufgrund von vergangenen Zugriffen passen. Beispielsweise durch Interessensbewertungen.

Dadurch ist es im Gegensatz zum Stand der Technik z.B. möglich, den Kontext nicht nur für eine Internetseite zu benutzen, um Werbung zu bestimmen, sondern auch Seiten, die zuvor besucht wurden, beim Bestimmen von Werbung einzubeziehen. Solche oder ähnliche Vorgehen ermöglichen zudem auch den Einsatz in anderen Gebieten, wie z.B. Suchmaschinen anzuwenden. Dadurch können relevante Suchergebnisse oder Werbung aufgrund des Speicherns vergangener Suchergebnisse bestimmt werden. Beispielsweise sucht ein Benutzer Begriffe und erhält kein zufriedenstellendes Ergebnis. Deshalb modifiziert er die Suchparameter oder die Begriffe. Je nachdem welche Begriffe, Themen, Kategorien oder weitere Elemente, immer wieder auftauchen, lässt sich dadurch ableiten, wo das Hauptinteresse oder die Hauptinteressen des Benutzers liegen. Dies kann zum Beispiel dazu verwendet werden, daraufhin besonders passende Werbung zu bestimmen, oder auch um dem Benutzer bessere Suchbegriffe und/oder auch Ergebnisse, die er eigentlich sucht zu präsentieren.

Ferner kann ein So-ad-tec System zumindest über ein hierarchisches Schema verfügen. In einem solchen Schema können zum Beispiel Produkte in Kategorien geordnet werden. Somit können Werbende nicht nur direkt für einzelne Wörter werben, sondern auch für Kategorien. Dadurch, dass ein So-ad-tec über mehrere solcher Schemata verfügen kann, ermöglicht dies eine viel präzisere Steuerung als bei heutzutage eingesetzten Werbesystemen, bei denen die Werbung auf Wörtern oder Themen beruht und Hierarchien nicht beachtet werden. Auch ist es somit möglich, dass Werbende bestimmen, ob sie auch tiefer in der Hierarchie vorhandene Elemente bewerben möchten.

Aufgrund der Eigenschaften der vorliegenden Erfindung ist diese auch in weiteren Bereichen einsetzbar, insbesondere als System oder Verfahren, um es zu ermöglichen, Produkte in Dokumenten, insbesondere in Videos oder Bildern zu markieren. Heutzutage können oftmals Personen oder generell Bereiche in Bildern mit Tags, die rein textuell und nicht als Klassifikation genutzt werden, markiert werden. Durch ein So-ad-tec System ist es nicht nur möglich, diese Bereiche zu markieren, sondern vielmehr damit durch Tags Verweise auf Produkte zu erzeugen. Dies macht es auf ganze neue Art und Weise möglich, den Inhalt von Dokumenten in denen Tags verteilt wurden zu erfassen und zusätzlich mit einem oder mehreren Schemata in Verbindung bringen zu können. Insbesondere in Sozialnetzwerken können dadurch erstmals weitere Informationen als Personen "verlinkt" werden. Dadurch, dass somit z.B. auch Kleidung Produkte darstellt, sind auch völlig neuartige Applikationen oder auch Analysen denkbar. Beispielsweise "wer trägt was?". Ein besonderes Feature über das ein So-ad-tec System hierbei verfügen kann, ist die Fähigkeit, dass Belege der Benutzer im System hinterlegt werden können, um zum Beispiel Markierungen einfacher zu gestalten zu können.

Zusätzlich kann ein So-ad-tec System Kontextdaten bei einem Zugriff verwenden. Solche Kontextdaten können beispielsweise Tags sein. Somit ist es möglich Werbung, aufgrund von Tags, abzurufen. Durch diese Neuheit wird es ermöglicht, neue Anwendungsmöglichkeiten und neue Arten von "Product Placement" zu realisieren. Somit ist es beispielsweise möglich, Produkte durch Tags in Bildern zu markieren und dann passend zu den Tags, Werbung anzuzeigen. Dies eröffnet Werbetreibenden völlig neue Vertriebswege, da vorher Produkte nicht Dokumenten, wie zum Beispiel Privatbildern von Personen in Social Networks zugeordnet werden konnten.

Besonders vorteilhaft ist die Fähigkeit des So-ad-tec Systems weitere Daten, außer Kontextdaten, beachten zu können. Dies ist sehr wertvoll, weil zum Beispiel Kontextdaten und Benutzerdaten gleichzeitig beachtet werden können. Dadurch wird es möglich, weitaus komplexere Zuordnungen von Werbung zu Dokumenten durchzuführen, als es heutzutage möglich ist. Beispielsweise können durch die Benutzerdaten Entscheidungen getroffen werden, welche Inhalte den Benutzer auf grund seines Profils interessieren. Dies ermöglicht benutzerzentrierte und dennoch kontextbezogene Werbung. Wird dabei noch Information aus dem Schema genutzt, können noch weitere Informationen, wie beispielsweise über Hierarchien eingebunden werden, um besonders effiziente und relevante Werbung zu bestimmen.

Vorherige Ausführungen können natürlich auch genutzt werden, um direkt oder indirekt Daten in eines oder mehrere Schemata, oder auch in anderen Speichereinheiten zu schreiben. Hierbei ist der große Vorteil, dass diese Daten bei erneuten Zugriffen verwendet werden können. Zum Beispiel kann hinterlegt werden, dass Benutzer Werbung ignorieren, wenn sie mit bestimmten Kontexten zusammen auftaucht. Durch das Nutzen solcher Zugriffsinformationen kann die Werbeeffizienz noch weiter gesteigert werden.

Ein weiterer Vorteil eines So-ad-tec Systems ist, dass es keine starren und unveränderbaren Schemata besitzt. Ein besonderes Merkmal des Schemas ist auch, dass es keine feste unveränderbare Struktur besitzt, sondern vielmehr zur Laufzeit geändert werden kann. Dies ermöglicht eine besonders flexible und schnelle Anpassung an neue Situationen. Dies ist besonders nützlich, weil hierdurch das Schema stets aktuell gehalten wird und auch weitere Informationen aufgenommen werden können.

Man beachte, dass ein So-ad-tec System auch über Detektoren verfügen kann, die helfen können, Produkte in Dokumenten aufzudecken. Diese sind im Bezug auf Werbung besonders nützlich. Insbesondere die Fähigkeit diese mit menschlichen Fähigkeiten zu kombinieren. Zum Beispiel, um solche Detektoren zu trainieren, oder auch um deren Ergebnisse zu verifizieren.

Eine weitere Fähigkeit des So-ad-tec Systems sind Analysefähigkeiten, die auch unabhängig eines So-ad-tec System genutzt werden können, um Schemata optimal anzupassen oder zu erstellen.

Eine weitere Besonderheit ist das Nexusnodes System oder Verfahren, das unter Anderem in Kombination mit dem So-ad-tec System oder auch unabhängig von diesem benutzt werden kann. Dies kann zum Beispiel für das Verweisen auf Werbung oder als Schema verwendet werden. Dabei löst ein Nexusnodes System das Problem, dass im Internet derzeit Hyperlinks (im Weiteren kurz Link genannt) auf genau eine Ressource verweisen, und dass beim Anlegen dem Benutzer die letztendliche URL des Linkziels bekannt sein muss. In einer Ausführungsform weist ein Nexusnodes System auf:
a. Zumindest eine Knotenverwaltungseinheit, die es ermöglicht, zumindest einen Knoten zu verwalten, der durch Verweise in Dokumenten angesprochen werden kann;
b. Wobei ein Knoten auf eines oder mehrere Ziele verweisen kann, und ein Knoten die Funktion eines Stellvertreters für weitere Ressourcen haben kann.

Durch dieses erhalten Benutzer die Möglichkeit in einem Computernetzwerk flexibel Verweise zu Ressourcen zu setzen. Dabei muss ein Knoten, im weiteren Nexus oder Nexusknoten genannt, nicht explizit erzeugt werden, sondern er entsteht automatisch virtuell, wenn auf ihn verwiesen wird. Der große Vorteil dieser Lösung gegenüber dem Stand der Technik ist, dass den Benutzern die Adresse des Ziels noch unbekannt sein kann, und dennoch in einem Dokument ein Verweis auf verwandte Dokumente, oder auch Themen gesetzt werden kann. Durch den Nexusknoten kann so hochflexibel erst später das eigentliche Ziel eingetragen werden. Zudem ist es möglich, auf mehrere Ressourcen gleichzeitig zu verweisen, was zum Beispiel mit derzeitigen Technologien, wie Hyperlinks, nicht möglich ist. Des Weiteren erlaubt es ein Nexusnodes System wesentlich einfacher Verweise einzusetzen, als nach dem Stand der Technik bisher möglich. Es ist dabei möglich, durch einfache grammatikalische Regeln, intelligente Kurzformen zu nutzen, die besser zu der menschlichen Sprache als Hyperlinks passen. Diese können zudem automatisch durch Links ersetzt werden. Dabei ist es sogar möglich, dass intelligente Erkennungsverfahren eingesetzt werden. Z.B. kann durch den Kurzverweis "my:car", der durch eine grammatikalische Regel möglich ist, automatisch aufgelöst werden, welcher Benutzer mit "my" bestimmt ist. Für Benutzer ist vor allem die Fähigkeit auf Produkte, wie zum Beispiel auch eigene Besitztümer zu verweisen, eine Möglichkeit, sich selbst zum Ausdruck zu bringen. Dies ist eine große Verbesserung zu der weit verbreiteten Hyperlink Technologie, da somit im Internet auch Verweise, ähnlich wie in Wikipedia, im offenen Netz möglich sind, die aber im Vergleich zu diesem nicht nur auf eine Zielressource begrenzt sein müssen.

Heutzutage ist es ein Problem zu unterscheiden, ob ein Benutzer menschlich oder eine Maschine ist. Um diese Frage zu beantworten wird oftmals ein Text oder Audiobasierter CAPTCHA Test (http://de.wikipedia.org/wiki/CAPTCHA) verwendet. Dabei existieren die Probleme, dass menschliche Arbeitskraft verbraucht wird, ohne sie zu nutzen und dass aufgrund der verbesserten Fähigkeiten von OCR Software textbasierte CAPTCHAs immer schwerer durch den Mensch zu lösen sind. reCAPTCHA (http://recaptcha.net/) löst dabei das Problem, dass menschliche Arbeitskraft verloren geht, indem Texte dabei digitalisiert werden. Dennoch bleibt das Problem der immer schwereren Lesbarkeit bestehen. Daher stellt sich das technische Problem, einen effektiven Ersatz für text- und audiobasierte CAPTCHA zu schaffen. Diese Aufgabe wird von einem SCAPTCHA (smart CAPTCHA) System oder Verfahren gelöst. In einer Ausführungsform weist ein SCAPTCHA auf:
a. Einen Zugriffsentscheider, um zumindest eine Entscheidung, über zumindest einen Zugriff, anhand der Antwort zumindest eines Rätsel zu fällen;
b. wobei die LösungBeantwortung des Rätsels dazu genutzt werden kann, um Informationen zu gewinnen und solche Informationen zumindest einem weiteren Zweck dienen

Somit ist möglich, nicht nur OCR durch Benutzer durchführen zu lassen, sondern viel mehr menschliche Fähigkeiten zu nutzen. Dies macht es möglich Objekte, zum Beispiel Tierarten, oder auch spezielle Tiere, auf Bildern zu erkennen. Diese Daten könnten dann z.B. als Kontextdaten für ein Sa-ad-tec System verwendet werden. Durch ein solches System lösen Menschen außerdem Aufgaben, wie Kategorien zu erkennen oder zueinander in Beziehung zu setzen oder Verhältnisse zueinander zu bewerten. Zudem erkennen Benutzer Informationen in Bildern und helfen dabei Schemata anzupassen. Oder menschliche Arbeitskraft wird benutzt, um komplette Schemata zu erstellen oder anzupassen. Insbesonders für Bilder und Videos kann ein solches System oder Verfahren eingesetzt werden, wobei es hierbei sogar möglich ist, technische und menschliche Intelligenz zu kombinieren. Auch ist es möglich, ein solches System für die Spracherkennung einzusetzen. Diese Aufgaben haben den Vorteil, dass der Benutzer sie einfach lösen kann, aber dennoch ein Computer große Probleme hat, sie zu lösen. Des Weiteren ist es dadurch nun möglich Regeln, die ein Mensch benutzt, durch ein Rätsel zu erkennen. Ganz im Gegensatz zum Stand der Technik ist es nun möglich, weitere Methoden, als die reine Erkennung von Buchstaben oder Zahlen durchzuführen. Zusätzlich ist es nun möglich, die Antworten nicht nur für ein Rätsel zu gebrauchen, sondern diese zu etwas Nützlichem zu verwerten. Damit offenbart diese Erfindung eines SCAPTCHA Systems einen Apparat und ein Verfahren, das es erlaubt, die menschliche Leistung, die bei Verifikation als Mensch genutzt wird, verfügbar zu machen.

Ferner kann ein solches System über eine Auswertungseinheit verfügen, die es ermöglicht zu erkennen, ob eine oder mehrere Lösungen von Menschen oder Maschinen beantwortet werden. Dies ermöglicht es, diese Erkennung auch zu benutzen, um über den Zugriff zu entscheiden und erweitert das System, das vorher nur anhand von Lösungen über den Zugang entschieden hat.

Man beachte, dass Rätsel auch durch verschiedene Benutzer gelöst werden können. Dabei ist es möglich, auch Wahrscheinlichkeiten für die Antworten zu bestimmen. Dabei können auch weitere Mittel einfließen, beispielsweise in diesem Dokument Vorgestellte, wie zum Beispiel Benutzerinformationen. Generell können hierbei auch Mittel zur Analyse verwendet werden. Dies führt dazu, dass durch die Beachtung dieser Faktoren die Antworten der Benutzer besonders gut verarbeitet werden können, und die Erkennungsrate von Mensch und Maschine noch weiter verfeinert werden kann.

Zusätzlich können auch beim Bestimmen des Inhaltes des Rätsels oder des Rätsels selbst weitere Informationen benutzt werden. Dies können zum Beispiel Benutzer oder Kontextinformationen sein, in denen ein solches Rätsel vorkommt. Dies kann zum Beispiel dazu verwendet werden, die Ergebnisse des Rätsels besser bewerten zu können. Auch ist es möglich dadurch Rätsel zu erstellen, die besonders auf einen Benutzer zugeschnitten sind oder einen werbenden Effekt haben. Generell ist es somit möglich, sämtliche Mittel und Verfahren eines So-ad-tec oder eines Nexusnodes Systems zu benutzen, um Rätsel oder deren Inhalte zu bestimmen.

Besonders vorteilhaft ist auch das Nutzen der Informationen eines SCAPTCHA Systems, um eines s oder mehrere Schemata anzupassen oder zu erzeugen. Dadurch ist es möglich in dem Schema die Intensität von Beziehungen zu bewerten oder auch die in Hierarchien oder andere Arten von Beziehungen zu ordnen. Dies macht es möglich besonders Schemen, die der menschlichen Wahrnehmung und dem menschlichen Empfinden entsprechen, durch ein solches System zu erstellen oder auch zu verbessern.

Ein solches System ist auch in weiteren Bereichen einsetzbar. Wenn die Fähigkeiten der Benutzer bekannt sind, kann es zum Beispiel benutzt werden, um Expertenwissen in Schemata zu erfassen. Des Weiteren kann ein solches System dafür benutzt werden, Systeme/Verfahren zu trainieren.

Zum Beispiel die in diesem Dokument beschriebenen Detektoren. Hierbei sind auch Anwendungsfälle denkbar, bei denen Menschenfähigkeiten mit denen einer Maschine kombiniert werden können. Beispielsweise erkennt ein Mensch ein Mobiltelefon auf einem Bild. Die Überprüfung, ob der Bereich richtig markiert ist, wird dann durch einen Algorithmus durchgeführt. Dies ermöglicht es, dass nicht wie heutzutage das komplette Bild untersucht werden muss, sondern vielmehr ein Teilbereich, was Rechenleistung und vor allem Energie spart.

Grundlegend kann ein solches System zum Beispiel in Social Networks eingesetzt werden, aber auch in Foren. Generell ist der Anwendungsbereich des Internets oder anderer Computernetzwerke auch auf mobilen Endgeräten bevorzugt. Dabei wird das Rätsel dem Benutzer über Kanäle zugestellt, dieser beantwortet es, und ein technisches Gerät sendet daraufhin die Antwort an das System. Generell kann ein solches System auch als verteiltes System mit der gleichen Funktionalität erstellt werden.

Zuletzt stellt die vorliegende Erfindung ein Computerprogramm bereit, das Instruktionen aufweist um jegliche hierin beschriebene Verfahren auszuführen.

### 4. Kurze Beschreibung der Zeichnungen:

- Fig. 1:: Ein So-ad-tec System mit einem oder mehreren Schemata nach einer Ausführungsform der vorliegenden Erfindung;
- Fig. 2-3:: Verfahren eines So-ad-tec Systems nach einer Ausführungsform der vorliegen- den Erfindung;
- Fig. 4:: Ein So-ad-tec System nach einer Ausführungsform der vorliegenden Erfindung;
- Fig. 5:: Eine Werbungsstrukturzugriffseinheit nach einer Ausführungsform der vorlie- genden Erfindung;
- Fig. 6a-e:: Exemplarische Schemata;
- Fig. 7:: Exemplarisches Beispiel für die Interessensentwicklung über einen Zeitraum;
- Fig. 8a-9b:: Beispiele für mögliche Verbindungen von Konten in Schemata;
- Fig. 10:: Interaktion eines So-ad-tec Systems nach einer Ausführungsform der vorliegen- den Erfindung;
- Fig. 11:: Exemplarisches Beispiel für ein durch Tags markiertes Medium;
- Fig. 12:: Ein SCAPTCHA System und Interaktionen nach einer Ausführungsform der vorliegenden Erfindung;
- Fig. 13:: Ein Nexusnodes System nach einer Ausführungsform der vorliegenden Erfin- dung;
- Fig. 14:: Interaktion eines Nexusnodes Systems nach einer Ausführungsform der vorlie- genden Erfindung;

### 5. Detaillierte Beschreibung von bevorzugten Ausführungsformen:

Die vorliegende Erfindung betrifft in einer Ausführungsform allgemein die Werbung im Internet und insbesondere das Bestimmen von Werbung für eines oder mehrere Dokumente 10. Unter Werbung sind hierbei jede Elemente/Artefakte zu verstehen, wie sie im Zusammenhang mit Werbung im Kontext von menschlicher Kommunikation auftreten. Beispielswiese ist es Werbung, die Gunst zu gewinnen, auf ähnliche oder weitere Webseiten hinzuweisen, Entscheidungen zu beeinflussen, Reaktionen auszulösen oder auch um einen Partner zu werben oder Interesse zu wecken. Des Weiteren trifft auf Werbung der betriebswirtschaftliche Begriff der Werbung zu, die darauf gezielt ist, etwas zu bewerben. Werbung kann somit viel mehr als Werbemittel verstanden werden, welches beispielsweise dazu benutzt werden kann, um eine Reaktion auszulösen oder/und zu beeinflussen. Somit sind dahingehend auch andere Werbemittel wie Propaganda, Meinungs-und Imagepflege, Missionierung, Rufaufbesserung, Kaufanregungen, Drängen und Flirten.

Oftmals beinhaltet Werbung ein spezielles Produkt. Ein Produkt kann dabei ein Mensch oder ein Erzeugnis von Menschen, aber auch ein Platz oder ähnliches, ein Gegenstand, eine Idee oder anderes Gedankenkonstrukt sein. Ein Produkt ist somit nicht zwingend etwas Reales. Beispiele für Produkte können Ware/Güter sein, aber auch Hersteller, Marken, politische Ideen, Reformideen, Verfahren, Skigebiete, Dinge des täglichen Bedarfs, Luxusgüter, Netzwerke - elektronischer und natürlicher Art, Freizeitparks, Geschäfte, Dokumente 10, URLs oder Apparate, kurzum alles, bei denen bei Menschen das Bedürfnis geweckt werden kann daran teilzuhaben, dazuzugehören, es zu nutzen oder es zu besitzen.

Der Begriff der Werbung umfasst auch den Begriff der Werbungsdaten. Werbungsdaten können dabei die Werbung selbst, das Produkt, der Hersteller, Anzeigen oder weitere Mittel, die zur Beschreibung von Werbung dienen, sein. Zum Beispiel, welche Produkte sich derselben Kategorie zuordnen lassen. Anzeigen sind dabei Dokumente 10 oder andere Formen, die Mittel enthalten, um Interesse zu wecken, um zum Beispiel ein Produkt zu bewerben. Werbungsdaten können weitere Mittel oder Daten enthalten, die dazu dienen können, um Produkte, Hersteller, die Wahrscheinlichkeit zum Auftauchen von Produkten an gewissen Plätzen oder sie können weitere Daten, die im Bezug auf Werbung auftreten, genauer beschreiben. Im Bezug auf Werbung kommt auch oftmals der Begriff Werbungsliste vor, der eine Ansammlung von Werbungen, insbesondere von Anzeigen enthält, die auch nach Relevanz strukturiert sein können. Des Weiteren ist es auch möglich, dass eine solche Liste keine Liste im ursprünglichen Sinne ist, sondern vielmehr eine Ansammlung von Werbungen.

Die vorliegende Erfindung arbeitet mit Dokumenten 10 zusammen, wobei solche Dokumente 10 zum Beispiel in einer Dokumentenbasis 10, auch als Datenbasis 10 bezeichnet, in der die Dokumente 10 abgelegt werden, vorkommen können. Ein Beispiel für eine Dokumentenbasis 10 ist ein Dateisystem. Jedoch kann eine Dokumentenbasis 10 auch aktiv sein, beispielsweise kann die Datenbasis/Dokumentenbasis 10 ein Webserver sein, oder auch mehrere Webserver, wie das Internet. Dabei bezieht sich der Begriff Datenbasis 10 auch auf mehrere Systeme oder auch über Computernetzwerke gekoppelte Systeme. Der Begriff Dokument 10 ist demnach ein Sammelbegriff für alle möglichen Ausgaben einer Datenbasis 10 oder auch eine Zusammenstellung von durch einen Benutzer erzeugten Daten. Ein Dokument 10 kann z.B. dynamisch von einer Datenbasis generiert werden, weshalb eine Datenbasis im Rahmen der vorliegenden Erfindung als Quelle oder Kombination von Quellen oder Quellsystemen anzusehen ist, von welchen Daten angefordert, geschrieben und / oder geändert werden können. Ein Dokument 10 ist demnach eine logische Einheit, eine Partition, Komponente und / oder Unterteilung und trifft daher auch auf Teile von Dokumenten 10 zu. Solche Teile von Dokumenten 10 werden im Rahmen der vorliegenden Erfindung auch Dokumentenfragmente genannt, was bedeutet, dass ein solches Dokumentenfragment Teil einer größeren logischen Einheit ist. Ausführungsformen der vorliegenden Erfindung können dabei die Strukturinformationen der Datenbasis 10 nutzen, um Zugriffe und Analysen der Datenbasis 10 zu verbessern und / oder zu beschleunigen. Als Datenbasis 10 und somit als Dokumente 10 können beispielsweise folgende Daten und zugehörige Systeme oder Systeme allein dienen: Hypertextdokumente, Word Dokumente, E-Mails, Webserver, Programmcode, Versionskontrollsysteme, API-Aufrufe oder Rückgabewerte, Subversion, CVS, Application Server, SAP Systeme, Data Warehouses, Textdokumente, Bilder, Audiodateien, Social Networks, Videos, Geodaten, Komponentenmodelle, virtuelle Maschinen, Issue Tracking Systeme, Testfälle, Modelle, domänenspezifische Sprachen, OpenOffice Dokumente, Blogs, Twitter, Social Networks, mobile Geräte, wie beispielsweise Handys, Peer-to-Peer-Netzwerke, Eingabegeräte, Dateisysteme, Datenbanken, Suchmaschinen, Server, Router, Maschinen, Sensoren, Testsysteme, Debugger, Menschen und / oder Automobile. Sofern die vorliegende Erfindung in einem Computernetzwerk eingesetzt wird, kann dieses Netzwerk und dessen Teilnehmer die Rolle der Datenbasis 10 einnehmen, im Internet z.B. das Internetnetzwerk selbst, Peer-to-Peer-Netzwerke, Webserver, Internetseiten, Klienten, mobile Klienten (z.B. Mobiltelefone, Notebooks, PDAs, etc.) und weitere Akteure. Eine Internetseite kennzeichnet dabei ein Dokument 10, das über das Internet erreichbar ist, und kann verschiedene Inhalte umfassen, die dort auftreten, wie z.B. für Hypertextdokumente, Videos, Bilder und weitere Dokumente 10, die Hyperlinks beinhalten können. Der Begriff Internetseite kann auch für mehrere Dokumente 10 stehen, z.B. alle oder ein Teil der Seiten unter einer bestimmten Domain. Somit ist der Begriff Internetseite auch ein Sammelbegriff für das, was allgemein Website oder Webseite genannt wird, d.h. ein Sammelbegriff für einen gesamten Internetauftritt, z.B. ein Auftritt eines Unternehmens, einer Organisation, einer Privatperson, eines Vereins, einer Interessensgruppe oder zu einem bestimmten Zweck, z.B. Verkauf, Handel, Information, Diskussion, Austausch, Vergnügen, Suche, Vermittlung etc. Eine solche Internetseite kann über verschiedene Protokolle übertragen werden, z.B. TCP/IP, HTTP, HTTPS, FTP, POP3, SMTP und andere Protokolle, die zur Kommunikation in Computernetzwerken eingesetzt werden.

Oftmals kommt in diesem Dokument der Begriff Tag vor. Ein Tag kann dabei als Synonym für den Begriff Markierung gesehen werden, die im Normalfall durch Benutzer erzeugt wird. Der Begriff des "tagging" bedeutet dabei den Vorgang des Markierens, als auch der letztendlich eine Markierung "Tag" zur Folge haben kann.

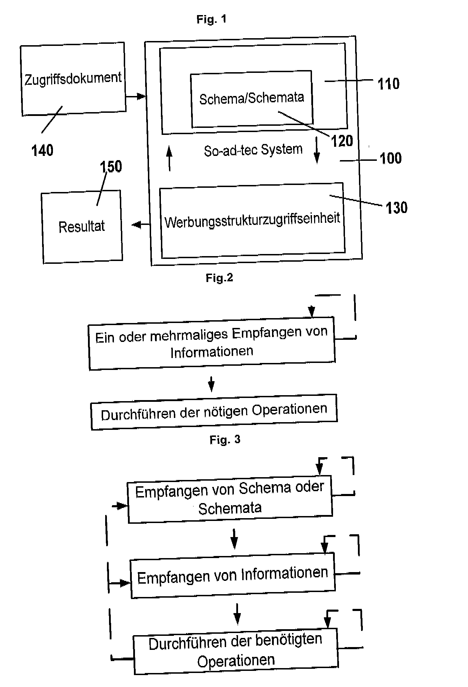

Fig.1 zeigt ein So-ad-tec System 100 gemäß der vorliegenden Erfindung. Ein So-ad-tec System 100 nimmt dabei ein oder mehrere Zugriffsdokumente 140 aus einer nicht dargestellten Eingabeeinheit entgegen, wobei ein solches Entgegennehmen auch ein Auslesen eines Dokumentes 10 aus einer Datenbasis 10 bedeuten kann. Oder das Zugriffsdokument 140 kann einen Verweis auf ein Dokument 10 in einer Datenbasis 10 enthalten, das letztendlich als Zugriffsdokument 140 genutzt werden soll. Das Zugriffsdokument 140 kann sowohl von einem menschlichen Nutzer als auch einer Maschine erstellt werden. Ein So-ad-tec System 100 weist Mittel auf, um ein solches Zugriffsdokument 140 zu verarbeiten, wie z.B. eine Werbungsstrukturzugriffseinheit 130 (kurz auch Zugriffseinheit in diesem Dokument genannt). Diese nutzt die Inhalte des Zugriffsdokumentes 140, um benötigte Operationen durchzuführen und eines oder mehrere Resultate 150 zu erzeugen. Solche Operationen können z.B. das Zusammenstellen des Resultates 150, oder z.B. bei einem Schreib/Änderungsvorgang das Schreiben/Ändern in eines oder mehrere Schemata 120 oder andere Mittel sein.

Dabei enthält ein So-ad-tec System 100 Mittel, wie z.B. ein Schema 120 oder/ und eine Speichereinheit 110 in denen, oder durch dessen Hilfe Werbung oder andere Daten strukturiert werden können. Diese Mittel können beim Durchführen von Operationen benutzt werden. Beispielsweise kann eines oder mehrere Schemata 120 bei einem Zugriff erweitert werden, z.B. durch das Hinzufügen neuer Elemente, oder eines oder mehrere Schemata 120 können in Kombination mit den Inhalten des Zugriffsdokumentes 140 dazu genutzt werden, um eine Anfrage zu beantworten.

Zugriffsdokument 140 und Resultat 150 müssen keine Dokumente 10 im klassischen Sinne sein. Vielmehr kann für ein Zugriffsdokument 140 die vorhergehende Definition gelten. Zum Beispiel kann ein Zugriffsdokument 140 und das Resultat 150 auch das Aufrufen von API-Funktionen sein. Dies können auch andere Techniken sein, die beim Zugriff auf computerimplementierte Erfindungen genutzt werden. Im Ergebnis repräsentiert ein Zugriffsdokument 140 und/oder das Resultat 150 jegliche Information zur Steuerung eines So-ad-tec Systems 100 oder weiteren in diesem Dokument 10 vorgestellten Systemen.

In einer alternativen Ausführung muss ein So-ad-tec System 100 nicht zwangsweise über eines oder mehrere fest installierte Schemata 120 verfügen. Vielmehr können solche Schemata 120 zusätzlich in einem oder mehreren Zugriffsdokumenten 140 als Inhalte oder zusätzlich zu diesen gegeben werden. Dadurch lässt sich ein So-ad-tec System 100 auch durch ein Verfahren, wie in Fig. 2 realisieren. Dabei können die Operationen, die nach dem Empfangen durchgeführt werden, auch das Speichern eines oder mehrerer empfangener Schemata 120 sein, um diese bei zumindest einem weiteren Zugriff zu nutzen. Dies wird in Fig. 3 gezeigt. Dabei können dieses Verfahren oder einzelne Schritte auch mehrmals durchgeführt werden oder/und auch einzelne Schritte wieder zu vorherigen Schritten zurückführen.

Sämtliche hier vorgestellten weiteren Varianten von Systemen lassen sich dabei in Verfahren oder Erweiterungen der bisher vorgestellten Verfahren umsetzen.

Grundlegend bietet ein So-ad-tec System 100 die Funktionalität für verschiedene Anwendungsfälle. Es können damit Analysen auch mit Berechnungen, z.B. wie oft welche Werbeanzeige abgernfen oder geklickt wurde, durchgeführt werden. Oder es kann als Suchmaschine, z.B. für Werbung oder bestimmten Bestandteile von Werbung, wie z.B. Anzeigen, insbesondere für zum Kontext passende, genutzt werden. Ferner kann es dazu genutzt werden, um Inhalte von Dokumenten 10 0 mit Werbung, z.B. Produkte zu verknüpfen. Beispielsweise könnten damit einem Benutzer Vorschlagslisten präsentiert werden, um Produkte in Bildern durch Tags zu markieren oder Tags könnten Produkten zugeordnet werden. Des Weiteren kann damit Werbung strukturiert werden, zum Beispiel durch Schemata 120. Ein weiterer Anwendungsfall ist das dynamische Generieren von passenden Werbungen, z.B. in der Form von Anzeigen, die für Benutzer personalisiert sein können. Weite Teile der offenbarten Erfindung lassen sich des Weiteren auch auf andere Inhalte als Werbung übertragen und sind daher in weiteren Bereichen, insbesondere im Bereich der Wissensstrukturierung und dem Zugriff auf Wissen einsetzbar. Darüber hinaus ist es möglich, das System in anderen Bereichen z.B. in der Medizin oder Psychologie zu nutzen. Dabei kann es dazu dienen, Wissensverbindungen/Wissensnetze/Erlebiüsnetze von Menschen zu analysieren oder auch zu erfassen, um es z.B. besser zu ermöglichen, traumatisierte Patienten zu behandeln. Die einzelnen Fähigkeiten eines So-ad-tec Systems 100 können dabei als eigenständige technische Geräte oder kombiniert in einem Gerät realisiert werden. Ein So-ad-tec System 100 kann auch dazu genutzt werden, um die Relevanz von Werbung zu Zugriffsdokumenten 140 zu bewerten.

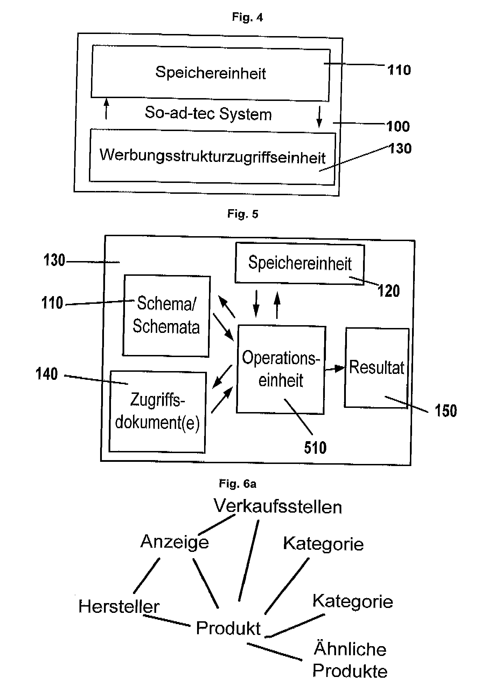

Besonders bevorzugt ist das Schema 120 in einem So-ad-tec System 100 in einer Speichereinheit 110 hinterlegt, so dass ein solches System durch das beschriebene Verfahren weitere Schemata 120 empfangen, hinzufügen oder vorhandene ändern, ergänzen oder auch löschen kann. Exemplarisch ist dies durch die Kombination von Fig. 4 und Fig. 3 oder Fig. 2 gezeigt.

In der Speichereinheit 110 können weitere Daten hinterlegt werden. Zum Beispiel Werbung, Werbungsdaten, welche Werbung abgerufen oder/und in Resultaten 150 angegeben wurde. Zusätzlich könnten auch die Reaktionen des Benutzers auf die Werbung gespeichert werden. Die Speichereinheit 110 muss hierbei nicht nur als eine Speichereinheit 110 auf einem Computer verstanden werden, viel mehr kann diese Speichereinheit 110 und das Schema 120 verteilt sein, zum Beispiel über ein Computernetzwerk, wie zum Beispiel einen Datenbankcluster. Generell sind hierbei alle Möglichkeiten denkbar, die für eine Datenbasis möglich sind.

Ferner kann ein So-ad-tec System 100 über Mittel verfügen, die es einem Klienten 920 direkt erlauben, dass eines oder mehrere Schemata 120 über Zugriffsdokumente 140 direkt angesprochen werden können, so als wären sie eine Datei auf dem Klienten. Besonders bevorzugt aber verfügt ein So-ad-tec System 100 über weitere Mittel, die es vereinfacht ermöglichen, Informationen zu Schemata 120 hinzuzufügen, zu ändern, zu löschen oder zu überarbeiten.

Man beachte, dass ein Schema 120 nicht zwingend in einer Infrastruktur vorhanden sein muss, sondern vielmehr auch auf Systemen der Werbenden vorhanden sein kann. In diesem Fall nimmt ein So-ad-tec System 100 die Rolle ein, die verschiedenen Schemata 120, die in Systemen vorhanden sein können zu integrieren.

Ein So-ad-tec System 100 kann zudem die Relevanz von Werbeanzeigen im Bezug auf ein Zugriffsdokument 140 und ein Schema 120 ermitteln. Dabei könnten auch Anzeigelisten, die nach Relevanz sortiert wurden, erzeugt werden.

Ein So-ad-tec System 100 kann auch durch besonders unterstützende Hardware realisiert werden. Beispielsweise können für Wahrscheinlichkeitsoperationen Fuzzy Chips verwendet werden, oder GPUs um Parallelverarbeitungen zu beschleunigen.

Besonders bevorzugt kann ein So-ad-tec System 100 oder weitere in diesem Dokument vorgestellten Systeme über das Internet angesprochen werden. Hierbei besitzen diese Schnittstellen, die es besonders einfach erlauben, auf die Funktionalität zuzugreifen. Z.B. REST, http, Webservice, SOAP und weitere gängige Technologien, wie sie aus dem Stand der Technik bekannt sind.

Besonders bevorzugte Klienten, die für alle offenbarten Systeme genutzt werden können, insbesondere für das Ausliefern von Werbung, sind aus dem Stand der Technik bekannte Klienten 920 von Computernetzwerken. Beispielsweise Webserver, KFZ- Fahrzeuge, Smartphones, normale Mobiltelefone, VOIP Geräte, TV und andere Haushaltsgeräte wie Kühlschrank oder Mikrowelle und andere mit Internetanschluss, Notebooks, Computer, Websemer, Webplattformen, Social Networks und weitere bekannte Techniken oder Technologien.

In einem Schema 120 können Werbung oder/und damit assoziierte Elemente strukturiert werden. Beispielsweise durch Beziehungen, Kategorien, Taxonomien, Prädikate oder/und weitere Mittel, die es ermöglichen, in irgendeiner Art und Weise nützlich zur Strukturierung zu sein oder nützlich für das Aufdecken passender Werbung sein können. Zum Beispiel kann ein solches Schema 120 eine XML Datei sein, ein semantisches Netz, eine Ontologie, wie z.B. RDF und OWL oder XML Topic Maps oder ein lernendes Netz. Sämtliche Technologien können kombiniert werden oder durch gleich mächtige Möglichkeiten ersetzt werden. Dabei kann ein solches Schema 120 hierarchisch sein, zum Beispiel, um Kategorien oder andere Objekte, wie z.B. Werbeanzeigen oder Produkte zu klassifizieren. Solche und andere Objekte könnten dann zum Beispiel in einer oder mehreren Monohierarchien, Polyhierarchien oder Heterarchien oder einer Mischform klassifiziert werden. Wichtig hierbei ist im Bezug auf Taxonomien zu sehen, dass Objekte, die in einer Taxonomie, die im Normalfall in einer monohierarchischen Struktur vorhanden sind, gegebenenfalls in weiteren Beziehungen, Teilen oder Taxonomien, vorhanden sein können. Durch die Erfindung ist möglich, dass nicht zwingenderweise nur ein festgeschriebenes Schema 120 eingesetzt werden muss, sondern es auch mehrere geben kann. Sofern Prädikate benutzt werden, um Relationen von Objekten im Schema 120 auszudrücken, können diese zum Beispiel Vererbungsrelationen, Instanzrelationen, partitive Relationen, Synonymie, Antonymie, Kausation, Eigenschaftsrelationen oder weitere Relationen sein, die dabei helfen, Beziehungen zwischen Objekten (Elementen des Schemas 120) auszudrücken. Des Weiteren können in solchen Schemata 120 weitere bekannte Mittel eingesetzt werden.

Eine weitere Variante, ein solches Schema 120 umzusetzen ist es, dieses direkt durch Programmcode zu realisieren. Dabei können sämtliche Schemakonstrukte dieser Erfindung direkt durch Programme oder ähnliche Konstrukte aus der Softwareentwicklung umgesetzt werden. Dies ist besonders vorteilhaft, um die Geschwindigkeit eines solchen Systems zu steigern.

Durch eines oder mehrere Schemata 120 können in diesen nicht nur Objekte zu Kategorien zugeordnet werden, sondern es kann zu viel mehr als zur reinen Klassifikation von Objekten genutzt werden. Es können neue Erfahrungen, z.B. in der Form von Zugriffsdokumenten 140, wie das Auftreten eines Produktes, dazu genutzt werden, eines oder mehrere Schemata 120 zu modifizieren, zu erweitern, oder zu verbessern. Dies kann zum Beispiel durch das Ändern der Eigenschaften von Kategorien geschehen.

Eine weitere Möglichkeit, die in Kombination mit einem Schema 120 eingesetzt werden kann, ist die Bildung von Inferenzen. Dies kann durch Angaben im Schema 120 oder auch durch weitere Mittel geschehen, wie z.B. eine Inferenzengine und Inferenzdaten. Durch solche Bildung von Inferenzen könnten Werbungen weiter spezifiziert werden. Dies kann mit weiteren Mitteln dazu genutzt werden, um gemeinsam mit weiteren Daten aus einem oder mehreren Zugriffsdokumenten 140, Werbung oder Daten darüber zu bestimmen. In Kombination mit einem Schema 120 können auch weitere Techniken benutzt werden, wie deduktive oder induktive Schlüsse. Es ist auch möglich, dass Mittel hinterlegt werden, die angeben, welche Objekte in einem Schema 120 sich ähnlich sind.

Auch ist es möglich, dass in einem oder mehreren Schemata 120 Wahrscheinlichkeiten hinterlegt werden. Zum Beispiel existiert ein Produkt verschiedener Hersteller. Dieses Produkt kann in einem Schema 120 beiden Herstellern zugeordnet werden. Dabei kann zum Beispiel als Wahrscheinlichkeit der Marktanteil der Hersteller hinterlegt werden. Hierbei wäre es auch denkbar, die Marktanteile in Regionen zu hinterlegen. Z.B. wenn ein Produkt in einem Dokument 10 erkannt wurde, kann diese Wahrscheinlichkeit beim Bestimmen des Herstellers mit einbezogen werden. Ein anderes Beispiel für den Einsatz von Wahrscheinlichkeiten ist die Kategorisierung von Objekten im Schema 120. Oftmals werden Objekte verschiedenen Kategorien verschieden stark zugeordnet. Zum Beispiel ein Smartphone zu Mobiltelefon und Organizer. Hierbei könnte als Wahrscheinlichkeit, die von der Masse bestimmte Zugehörigkeit benutzt werden. Es ist hierbei auch denkbar, dass im Schema 120 auch auf Benutzer, oder Benutzergruppen andere Wahrscheinlichkeiten hinterlegt werden, da verschiedene Nutzergruppen Kategorien anders auffassen könnten. Besonders bevorzugt ist ein solches Wahrscheinlichkeitsschema nicht starr, sondern wird aufgrund von Feedbackmechanismen justiert.

In Kombination mit oder in einem Schema 120 können auch Bayes'sche Netze eingesetzt werden. Dabei kann ein So-ad-tec System 100 über speziell hierfür optimierte Mittel verfügen.

Insbesondere werden in einem Schema 120 auch Erkenntnisse aus der Psychologie über Kategorienbildung und Wissenserwerb eingesetzt, um es zu ermöglichen, dass ein solches Schema 120 und dessen Kategorien der menschlichen Wahrnehmung entsprechen, und die Kategorien nicht starr voneinander abgegrenzt sind.

In Fig. 6a wird ein Beispiel für ein Schema 120 gezeigt. Dieses Schema 120 ordnet Produkten Hersteller und Verkaufsstellen zu. Produkte sind Kategorien zugeordnet und ähnlichen Produkten. Nicht dargestellt ist zum Beispiel, dass diese ähnlichen Produkte und Kategorien dabei auch hierarisch angeordnet sein können. Es wäre auch denkbar, Verkaufsstellen Kategorien zuzuordnen, oder auch Anzeigen Kategorien. Das Schema 120, das gezeigt wird, soll daher viel mehr die Grundidee eines solchen Schemas 120 darstellen, wie ein konkretes Schema 120. Allen im weiteren Verlauf folgenden Darstellungen über Schemata 120 ist hinzuzufügen, dass nur einige wenige Verbindungen dargestellt werden, um die Übersichtlichkeit zu erhöhen.

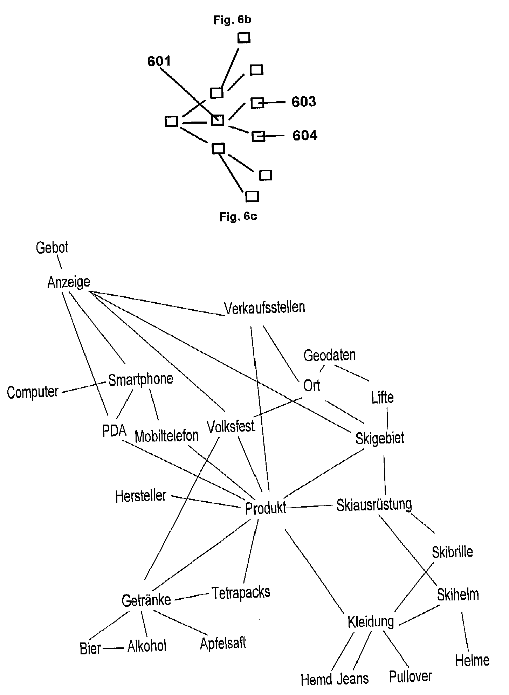

Fig. 6b zeigt ein Beispiel für ein abstraktes Schema 120. Die einzelnen Punkte sollen dabei Knoten darstellen. Zum Beispiel könnten 603 und 604 Unterkategorien oder auch zu einer Kategorie zugeordnete Objekte von 601 darstellen. Dabei könnte auch die Zugehörigkeit von 603 und 604 zu 601 verschieden stark sein. Beispielsweise durch prozentuale Zugehörigkeit.

Es ist auch denkbar, dass Fig. 6b eine Darstellung von Merkmalen ist. Zum Beispiel ist 601 ein Merkmal von verschiedenen Objekten und 603 und 604 sind diesem Merkmal zugeordnet.

In Fig. 6c wird exemplarisch ein Schema 120 dargestellt. Hierbei wurden jedoch die Beziehungen nicht explizit durch benannte Prädikate genauer bestimmt, was jedoch natürlich möglich wäre. Exemplarisch wurden als Objekte im Schema 120 Produkte, Kategorien, andere Objekte und Beziehungen zwischen diesen aufgezeigt. Man beachte, dass in diesem Schema 120 bewusst nicht alle möglichen und logischen Verbindungen eingezeichnet wurden, um die Übersichtlichkeit zu wahren. Es ist zu sehen, dass Kleidung eine Beziehung zu einem Produkt besitzt. Ferner besitzen z.B. Pullover eine Beziehung zu Kleidung. Dies könnte zum Beispiel bedeuten, dass Kleidung die Eigenschaften von Produkten erbt oder/und eine Kategorisierung darstellen.

Im Weiteren ist zu sehen, das Skibrille zu Kleidung, als auch zur Skiausrüstung gehört. Hier könnte beispielsweise unscharf festgelegt werden, wie sehr sie zu Kleidung und wie sehr sie zu Skiausrüstung gehört. Eben selbiges ist bei Mobiltelefon, PDA, Smartphone und Computer zu sehen. Ein Smartphone ist eine Mischung. Hierbei könnte das Schema 120 noch erweitert werden, und es könnte aus Zugehörigkeitszahlen auch noch erhalten, welche Personengruppe welche Zugehörigkeitswahmehmung hat. Zum Beispiel würde ein PDA Entwickler ein Smartphone eher als PDA einordnen, während ein Mobilfunktechniker dies eher als Mobiltelefon sehen würde und ein Informatiker könnte dies wiederum als Computer einordnen. Interessant ist auch die Verbindung zwischen Getränken und Tetrapacks. Diese Verbindung könnte zum Beispiel mit dem Prädikat als "sind oft" interpretiert werden. Somit könnten sich Rückschlüsse definieren lassen, auch mit Wahrscheinlichkeiten und somit unscharf, z.B. zu 80% ist in einem Tetra Pack ein Getränk. Ähnlich auch zum Beispiel die Beziehung zwischen Skigebiet und der dort vorkommenden Kleidung, wo die Verbindung indirekt über die Skiausrüstung existiert. In diesem Fall wäre natürlich auch eine direkte Verbindung vorstellbar. Diese indirekte, oder direkte Beziehung könnte zum Beispiel aussagen, dass die Produkte, die in einem Skigebiet benutzt werden, mit sehr hoher Wahrscheinlichkeit Skiausrüstungen zugehörig sind. Hierbei wäre es dann denkbar, da Skigebiete auch im Sommer geöffnet haben, die Beziehung zu der Skiausrüstung selbst wieder durch ein Prädikat zu beschreiben. Zum Beispiel Winter. Wobei Winter eigentlich nach dem bisherigen Verständnis einen Knoten darstellt. Dies bedeutet somit, dass ein solches Schema 120 "Kanten" haben kann, die selbst wieder durch Kanten beschrieben werden und somit die Stellung von Knoten einnehmen und umgekehrt.

Exemplarisch ist Anzeige in Fig. 6c mit verschiedenen Knoten verbunden. Dies soll zeigen, dass eine Anzeige sich auf bestimmte Knoten beziehen kann. Dabei ist es auch möglich, verschiedene Knoten, die durch das Zugriffsdokument 140 angesprochen wurden zu definieren. Dieses Beziehen könnte vom Werbenden festgelegt werden, aber auch automatisch, durch darauf spezialisierte Mittel. Beispielsweise aus Produktdaten und statistischen Erhebungen. Da Knoten und Kanten sich analog behandeln lassen, können sich Anzeigen auch auf Kanten beziehen. Des Weiteren kann eine Anzeige auch eine oder mehrere Regeln oder Computerprogramme sein, z.B. wie aus verschiedenen Konten dynamisch eine Anzeige generiert wird. Dies kann zum Beispiel dazu genutzt werden, um dynamisch zum Kontext oder zum Benutzer passende Anzeigen zu generieren. In solchen Regeln oder Computerprogrammen können dabei auch noch fest definierte Inhalte, wie z.B. Texte, Videos, Audios, Bilder sein, die es ermöglichen, variablen Inhalt automatisch durch Knoten oder Inhalte im Zugriffsdokument 140 oder/und durch Regeln oder Computerprogramme aufgedeckte Informationen zu ergänzen oder zu ersetzen. Dabei können natürlich auch weitere externe oder interne Informationen mit einbezogen werden.

Man beachte, dass eine Anzeige, auch mit Gewichtungen/Zugehörigkeitsstärken, verschiedenen Kategorien, Produkten oder anderen Objekten zugeordnet werden kann. Es kann in weiteren Daten spezifiziert werden, dass die Anzeige mehreren Objekten zugeordnet ist. Dabei können auch Logikverknüpfungen oder komplexe Zuordnungsregeln spezifiziert werden.

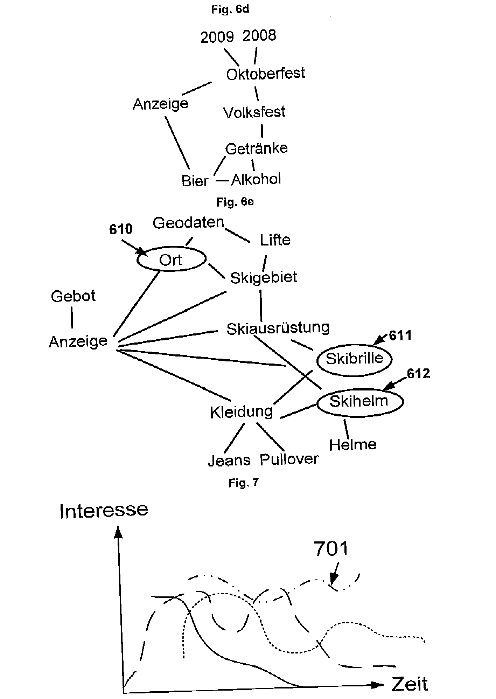

Exemplarisch vereinfacht wird dies in Fig. 6d dargestellt. Dabei wird einer Anzeige Oktoberfest und Bier zugeordnet. Dies könnte zum Beispiel eine Anzeige für bestimmtes Oktoberfestbier sein. Es ist in diesem Szenario auch denkbar, die Anzeige nur mit bestimmten Jahren des Oktoberfestes zu assoziierten.

Wichtig im Bezug auf das Schema 120 ist die Tatsache, dass Anzeigen nicht direkt im Schema 120 hinterlegt sein müssen, sondern dass es sich hierbei um Verweise vom Schema 120 zu Anzeigen handeln kann. Dies ist natürlich auch in umgekehrter Variante möglich. Generell ist die Struktur eines solchen Schemas 120 nicht zwingend direkt physikalisch der logischen Darstellung entsprechend, vielmehr stellt ein solches Schema 120 einen Realisierungsplan vor, zu dessen Umsetzung weitere Mittel genutzt werden können. Beispielsweise um Operationen und Zugriffe, die das Schema 120 nutzen zu optimieren.

In Fig. 5 ist die Werbungsstrukturzugriffseinheit 130 zu sehen. Diese verfügt über eine Operationseinheit 510. Durch diese Einheit oder andere Mittel, wie zum Beispiel der Speichereinheit 110 werden die Inhalte eines oder mehrerer Zugriffsdokumente 140 mit den Daten eines oder mehrerer Schemata 120 kombiniert. Daraus werden Rückschüsse gebildet, oder es werden Daten geschrieben und/oder geändert.

Wie zu sehen ist, kann eine solche Werbungsstrukturzugriffseinheit 130 auch weitere Daten nutzen oder erzeugen. Diese Daten können zum Beispiel Daten aus einer Speichereinheit 110, z.B. der zuvor beschriebenen, sein. Beispielsweise können in diesen Daten Informationen über vergangene Zugriffe oder Operationen abgelegt werden. In diesen Daten könnten sich zudem auch Regeln oder/und Programme oder Verweise auf selbige befinden, die dazu genutzt werden, den Zugriff durchzuführen. Solche Regeln oder Programme können zum Beispiel dazu genutzt werden, um zu bestimmen, welche Anzeigen am besten zu Zugriffsdokumenten 140 und/oder zum Schema 120 passen und ein Resultat 150 mit den Anzeigen zu erzeugen.

Dadurch ist es im Gegensatz zum Stand der Technik z.B. möglich, den Kontext nicht nur für eine Internetseite zu benutzen, um Werbung zu bestimmen, sondern auch Seiten, die zuvor besucht wurden, beim Bestimmen von Werbung einzubeziehen. Hierbei können weitere, für diesen Anwendungsfall spezialisierte, Mittel genutzt werden.

Beispielsweise können dadurch Themen, Klassifikationen, Kategorien und weitere Objekte bestimmt werden, die in einem Dokument 10 vorkommen. Generell sind hierbei alle Mittel, die in diesem Dokument 10 vorkommen, nutzbar. Dabei kann bestimmt werden, welche dieser Dinge besonders oft vorkommen. Es kann dabei auch eine Interessensbewertung für jedes Objekt in der Speichereinheit 110 abgelegt werden. Je öfters ein Element auftaucht, desto mehr scheint es den Benutzer zu interessieren. Wenn dieses Element länger nicht auftaucht, sinkt das Interesse des Benutzers. Dies kann zum Beispiel auf einer Social Network Plattform benutzt werden. Somit kristallisieren sich auf Dauer Interessensgebiete heraus, aufgrund derer der Benutzer auf der Social Network Webseite surft. Die Interessensbewertung kann dabei dazu genutzt werden immer konkreter passende Werbung zu bestimmen.

Auch kann dies dazu genutzt werden eines oder mehrere Schemata anzupassen und neue Verbindungen in Schemata zu erzeugen. Generell ist dies auch außerhalb des Anwendungsfalles von Werbung und als eigenständiges Gerät einsetzbar, zum Beispiel um Wissensbasen zu erzeugen.

Zudem lässt sich das Bestimmen des Benutzerinteresses nicht nur für Werbung, sondern auch für andere Zwecke verwenden.

Beispielhaft wird dies in Fig. 7 gezeigt. Dabei zeigen die verschiedenen Linienarten verschiedene Themen, Kategorien oder weitere Objekte die vorliegen. Aufgrund der Zeit gewinnen diese an Interesse, oder das Interesse daran flaut wieder ab. Aber es kann auch Objekte geben, die sich konstant auf einem hohen Niveau halten, wie zum Beispiel 701. Dies kann darauf hindeuten, dass dies ein zentrales Thema für den Benutzer ist. Zudem kann auch die Tatsache, wie sich Objekte und das Interesse dafür zu einander verhalten genutzt werden, um Analysen zu erstellen oder das Schema 120 zu verbessern.

US 2008/0313175 A1 stellt ein Verfahren bereit, das eigentlich dafür gedacht ist, aufgabenzentriert zu arbeiten. Dies kann dazu verwendet werden, dass ähnlich wie ein Aufgabenkontext ein Interessenskontext bestimmt wird, durch den dann Werbung angezeigt wird. Ein solcher Interessenskontext lässt sich beispielsweise durch Aktionen des Benutzers bestimmen, wobei hierbei zudem eines oder mehrere Schemata verwendet werden können. Sämtliche Berechnungen, auch aus Implementierungen der Lehre (http://tasktop.com, http://www.eclipse.org/mylyn), beispielsweise über die Interessensbewertung, lassen sich nunmehr auch im Bezug auf Werbung und weitere offenbarte Elemente dieser Erfindung nutzen. Auch auf gewöhnliche Dokumente 10. Abstrakt lässt sich ein solches System wie folgt beschreiben:
a. Speichern von Daten in zumindest einem Interessenskontext, aufgrund von Aktionen zumindest eines Benutzers;
b. wobei der Interessenskontext dazu genutzt wird, um Rückschlüsse über Interessen zumindest eines Benutzers zu gewinnen

Das Verfahren oder System mehrmals Inhalte zu empfangen und dadurch abzuleiten, was den Benutzer interessiert, lässt sich auch auf Suchmaschinen anwenden. Beispielsweise sucht ein Benutzer Begriffe und erhält kein zufriedenstellendes Ergebnis. Daher modifiziert er die Suchparameter oder die Begriffe. Je nachdem, welche Begriffe oder aus einem Schema ableitbare, Themen, Kategorien oder andere Elemente regelmäßig auftauchen, lässt sich ableiten, wo das Hauptinteresse oder die Hauptinteressen des Benutzers liegen. Dies kann zum Beispiel dazu verwendet werden, darauf folgend besonders passende Werbung zu bestimmen, oder um den Benutzer bessere Suchbegriffe, und/oder auch Ergebnisse, die er eigentlich sucht zu präsentieren. Besonders bevorzugt lässt sich dies mit einem Hyperadapter (EP09180953) verwenden, wobei zum Beispiel die Hauptinteressensgebiete die Dimensionen, die der Benutzer sucht, sein können. Abstrakt lässt sich ein solches System oder Verfahren mit einer Suchmaschine wie folgt beschreiben:
a. Das Bestimmen für den Benutzer relevanter Suchergebnisse oder Werbung, aufgrund des Aufzeichnens von Benutzereingaben;
b. wobei ein solches System oder Verfahren über weitere Mittel verfügt, die es ermöglichen, besonders treffsicher Interessen des Benutzers durch die Benutzereingaben zu bestimmen

Dabei kann durch das Bestimmen der Suchergebnisse mit einer Assistenz-, Lösungsvorschlags-, oder Lösungsfunktion kombiniert werden. Eine solche Suchmaschine kann dabei alle weiteren Mittel nutzen, die in diesem Dokument 10 offenbart werden und aus dem Stand der Technik bekannt sind.

Man beachte dabei, dass die vorhergehende Beschreibung auf einen Benutzer bezogen war. Aber das Verfahren und System kann auch auf Benutzergruppen angewendet werden und über hierfür besonders spezialisierte Mittel verfügen. Zum Beispiel können Daten anderer Benutzer aus der Vergangenheit genutzt werden, deren Interessen ähnlich verteilt waren um schneller die Hauptinteressen eines aktiven Nutzers zu bestimmen. Der Inhaltskontext könnte auch von mehreren Benutzern gemeinsam benutzt oder zur Verfügung gestellt werden.

Es ist möglich, dass ein So-ad-tec System 100 weitere Regeln oder Programme, durch Zugriffsdokumente 140 selbst oder Verweise darin empfängt, um diese dann zukünftig nutzen zu können. Hierbei verfügt das So-ad-tec System 100 über Mittel, mit denen es ermöglicht wird, diese Regeln oder Programme zu bearbeiten, zu ändern oder upzudaten. Dies kann zum Beispiel durch eine Konfigurationsdatei geschehen, in der angegeben wird, welche Regeln oder Programme genutzt werden sollen.

Da solche Regeln oder Programme auch über Zugriffsdokumente 140 übermittelt werden können, könnte eine alternative oder ergänzende Ausführung die Daten nicht lokal zur Verfügung haben, sondern diese zum Beispiel über Resultate 150 exportieren.

Ein Beispiel für das Durchführen eines Zugriffs ist das Bestimmen von Anzeigen, aufgrund von Inhalten im Zugriffsdokument 140, in Kombination mit dem Schema, ist durch Fig. 6e gezeigt. Dort ist exemplarisch ein Schema 120, in dem Anzeigen verschiedene Knoten und Kanten zugordnet sind, dargestellt. Dabei sind diese Anzeigen abstrakt in der Zeichnung als Anzeige benannt. Die mit Kreisen umschlossenen Knoten stellen Knoten dar, die aufgrund der Informationen in einem oder mehreren Zugriffsdokumenten 140, oder auch durch Daten identifiziert werden können. Somit kann zum Beispiel der Knoten Skiausrüstung und Kleidung bestimmt werden, zu denen die Knoten Skibrille und Skihelm zugehörig sind. Im Bezug auf den Ort betrachtet, ist dieser auch indirekt durch Skigebiet mit Skiausrüstung verbunden. Dadurch kann z.B. eine Rangfolge der Knoten festgelegt werden, die dazu benutzt wird, zu bestimmen, welche Anzeigen am besten passen.

Man beachte, dass in der Fig. 6e alle Knoten gleich stark angesprochen erscheinen. Es ist aber möglich, dass diese verschieden stark angesprochen sind oder auch Kanten angesprochen werden.

Ein Schema kann in einem So-ad-tec System 100 natürlich auch zum Beispiel hierarisch sein, wie in Fig. 6c. Ein großer Vorteil eines Schemas 120 ist, dass Anzeigen nun auch Kategorien und nicht nur Wörtern zugeordnet werden können. Dies und weitere Eigenschaften des Schemas 120 ermöglichen es, zielgenauer zu den Daten im Zugriffsdokument 140, die gegeben worden sind, Werbungen aufzudecken.

Zu den Knoten in Fig. 6b kann Werbung zugeordnet werden. Beispielsweise werden durch das Zugriffsdokument 140 die Knoten 603 und 604 und 602 angesprochen. Durch das Schema 120 ist es jetzt möglich auch Knoten 601 als indirekt betroffenen "Kinderknoten" zu identifizieren. Somit kann diese Information zum Bestimmen von passender Werbung genutzt werden. Dies ermöglicht es zum Beispiel auch Werbung, die mit Knoten 601 verbunden ist, beim Erzeugen des Resultates 150 beachtet werden.

Solche Daten, die im Schema durch das Zugriffsdokument 140 angesprochen werden, können zum Beispiel Benutzerdaten oder auch Kontextdaten eines Dokumentes 10 sein, zum Beispiel ein Dokument 10, in das die Werbung eingebettet werden soll. Kontextdaten könnten zum Beispiel auch Tags sein, oder einfach nur Wörter, aber auch andere Arten von Dokumenten 10, wie z.B. Bildausschnitte.

Es ist somit möglich, auch mehrere Wörter einer Kategorie zugehörig zu machen. Somit entfällt oftmals eine Relevanzbewertung, weil dadurch direkt eine passende Kategorie erfasst werden kann.

Durch ein So-ad-tec System 100 können auch Werbungslisten erzeugt werden, die nach Relevanz sortiert sein können. Ein Beispiel für eine Werbungsliste können hierbei Anzeigen sein, die auf grund des Schemas und der Inhalte im Zugriffsdokument 140 aufgedeckt wurden. Beispiele für eine Relevanzsortierung kann eine Sortierung durch Gebote sein, oder auch der am besten passenden Werbung oder eine Kombination der beiden. Ein weiteres Beispiel kann eine Liste von Anzeigen sein, die auf den Verbindungsknoten oder Kanten des Schemas liegen. Dabei können beim Erzeugen von Werbunglisten, die Mittel eines Schemas, wie zum Beispiel die "Intensität einer Wegstrecke" oder eines Knotens genutzt werden.

Wie zuvor erwähnt, können dabei auch weitere Mittel benutzt werden. Zum Beispiel, Wahrscheinlichkeiten oder Ausprägungsstärken, die im Schema selbst, oder auch im Zugriffsdokument 140 spezifiziert oder aus Inhalten darin errechnet werden können. Z.B. können die verschiedenen Knoten verschieden stark betroffen bewertet werden. Es könnte zum Beispiel der Ort weniger wichtig sein, wie Skibrille oder Skihelm. Oder auch die Wahrscheinlichkeit einer Kante, wie z.B., dass ein Ort zu einem Skigebiet gehört, könnte gegeben sein. Bei dieser Betrachtung sei erwähnt, dass solche Wahrscheinlichkeiten oder "Stärkeeigenschaften" sich nicht nur auf einen Knoten oder eine Kante beziehen müssen, sondern auch auf mehrere. Dies kann z.B. über Wahrscheinlichkeitsregeln definiert werden: Wenn Knoten A und B durch ein Zugriffsdokument 140 als angesprochen spezifiziert werden, folgt daraus, dass Knoten C zu 50 und D zu 30% wahrscheinlich zugehörig sind.

Im Zugriffsdokument 140 oder der Speichereinheit 110 können Inhalte vorhanden sein, die sich direkt oder indirekt auf Benutzer beziehen oder/und den Kontext, in dem die Werbung eingesetzt wird. In Fig. 6e könnten zum Beispiel Skibrille 611 und Skihelm 612 auf einem Bild durch Tags markiert sein, das ein Benutzer anschaut. Als Inhalte des Benutzers könnte dessen Heimatort (Ort 610), oder dessen Aufenthaltsort, der zum Beispiel aufgrund von Lokalisierungsmechanismen, wie z.B. GPS, IP-Lokalisierung, dienen. Der Standort könnte nun stärker gewichtet werden, beispielsweise weil der Benutzer sich in der Nähe eines Skigebietes befindet. Darauf würde nicht, wie oben beschrieben, Skiausrüstung als am besten passend empfunden werden, sondern Skigebiet, und insbesondere das Skigebiet in der Nähe des Benutzers.

Auch ist es möglich, die aktuellen Benutzerdaten mit den Benutzerstammdaten zu kombinieren oder zu vergleichen, wie zum Beispiel den aktuellen Standort und den Heimstandort und diese ausgewertete Information zu benutzen, insbesondere dafür, welche Werbeanzeige letztendlich passend ist.

Auch kann können zur Berechnung der Intensität Rechenregeln eingesetzt werden. Beispielsweise könnte der Vektor des Kontextes mit dem Vektor des Benutzers multipliziert werden, um dadurch die einzelnen Dimensionen im Kontext zu verstärken.

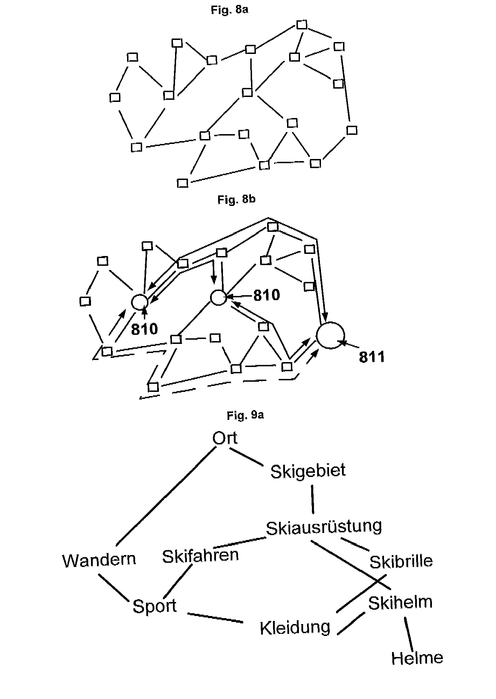

Generell kann ein solches Schema 120 als Graph gesehen werden. Somit können Verbindungen in einem Schema mit Problemen aus anderen Bereichen verglichen werden. Dies ermöglicht es, Algorithmen aus anderen Bereichen anzuwenden, beispielsweise Komplexitätsprobleme. Das Anwenden solcher Algorithmen kann zum Beispiel zum Aufdecken der passendenden Werbungen, dem Gewinnen von weiteren Informationen oder auch zur Restrukturierung des Graphen verwendet werden. In Fig. 8a wird hierzu ein Graph dargestellt, der ein Schema 120 zeigt. Fig. 8b zeigt dazu exemplarisch Knoten (Kreise 810, 811 z.B. stärker angesprochen/zutreffend oder gewichtet), die angesprochen wurden. Durch die Pfeile werden Verbindungen zwischen den angesprochenen Knoten gezeigt. Dabei ist zu sehen, dass einzelne Kanten gleichzeitig von mehreren Pfeilen betroffen sein können. Zudem kann jede Kante eine oder mehrere Gewichtungen, zum Beispiel in der Form einer Weglänge oder Benutzungshäufigkeit besitzen. Die Kanten selbst können auch weitere Eigenschaften besitzen. Wie zuvor erläutert, können auch Kanten mit Kanten assoziiert werden, womit Kanten und Knoten als Äquivalent bezeichnet werden können.

Der gestrichelte Pfeil zeigt, dass es noch alternative Verbindungen geben kann oder auch, dass Verbindungen zu "starken" Knoten direkt von allen Knoten berechnet werden könnten.

In einem So-ad-tec System 100 lassen sich Algorithmen aus der Schwarmintelligenz oder anderen Beobachtungen aus dem Tierreich anwenden. Zum Beispiel mit Ant Colony Optimization (ACO, http://www.m-boehmer.de/pdf/Schwarmintelligenz_Artikel.pdf), Particle swarm optimization(PSO, http://en.wikipedia.org/wiki/Particle_swarm_optimization).), Stochastic Diffusion Search(SDS, http://en.wikipedia.org/wiki/Stochastic_Diffusion_Search), Gravitational search algorithm(GSA, http://portal.acm.org/citation.cfm?id=1531036) oder hybriden Verfahren aus den zuvor genannten.

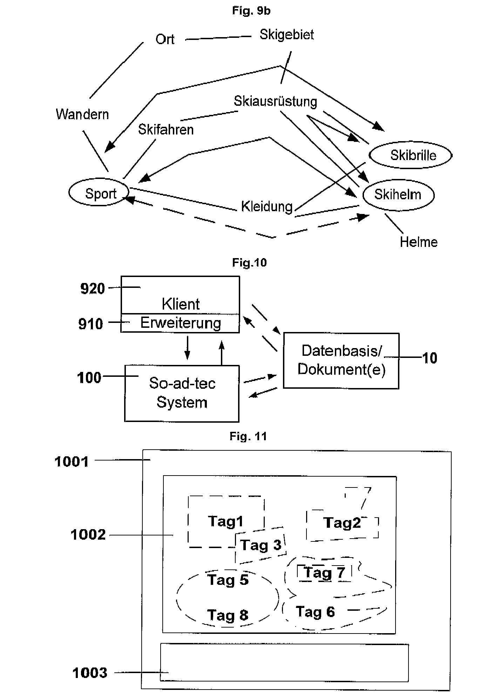

Zum Beispiel kann bei Fig. 8b die Verbindung zwischen Knoten durch den Ameisenalgorithmus (ACO) oder Abwandlungen davon, um die Verbindungen zwischen aktivierten Knoten zu bestimmen. Dadurch könnte festgestellt werden, welche Knoten und Kanten beim Suchen von Verbindungen besonders oft besucht werden. Die "Pheromone" bei dem ACO könnten dabei auf den Kanten und Knoten abgelegt werden. Dadurch würden sich bei jeder Verbindungssuche die Informationen von vorherigen Verbindungssuchen nutzen lassen. Anschaulicher wie das allgemeine Schema in Fig. 8a und 8b ist Fig. 9a und 9b durch die ein konkreteres Beispiel gegeben wird.

Besonders bevorzugt wird der ACO für diesen Anwendungsfall weiter optimiert. Ein Beispiel für eine Optimierung könnte es sein, die Wegstrecken von oft besuchen Kanten zu reduzieren und wenig benutzte Kanten langsam und/oder bis zu einer Schranke wachsen zu lassen. Dieses System würde es ermöglichen, dass Schemata 120 durch die Benutzung automatisch strukturiert werden. Dadurch, dass oftmals dieselben Themen/Objekte/Klassifikationen oder weitere Schemaelemente zusammen vorkommen, würde dies eine Struktur in das Schema 120 bringen. Diese Idee und Optimierung lässt sich desweiteren nicht nur auf Werbung, sondern generell zur Strukturierung von Beziehungen in einer oder mehreren Wissensbasen nutzen.

Eine weitere Möglichkeit, das zuvor Gesagte weiter zu verbessern, könnte es sein, das Resultat 150, das aufgrund von solchen Algorithmen zustande kommt zu bewerten und daraufhin entsprechende Aktionen durchzuführen, die es z.B. ermöglichen, Anpassungen am Algorithmus selbst oder dessen Parameter vorzunehmen. Ein einfaches Beispiel für eine Bewertung könnte sein, dass aufgrund der Verbindungen die Werbung, die bestimmt wurde, bewertet wird. Beispielsweise dadurch, dass sie einem Benutzer angezeigt wird. Klickt der Benutzer die Werbung an, so scheint die Verbindung gut zu sein und dies kann als positive Bewertung interpretiert werden.

Eine weitere Möglichkeit oder Ergänzung ist es GSA zu nutzen. Dabei werden durch diesen Algorithmus Regeln der Massenanziehung benutzt. Z.B. ist es dadurch möglich, die Beziehungen im Schema durch Gravitation zu beschreiben. So ist ein solches Schema mit einem Sternencluster vergleichbar, in dem sich die einzelnen Sterne bewegen. Dadurch könnten weitere Berechnungsmethoden aus dem astrophysikalischen Umfeld auf ein solches Schema angewendet werden. Hierbei sind auch weitere komplexe Anwendungen, wie etwa bewegte Planetenmodelle, denkbar.

In einem So-ad-tec System 100 kann besonders optimierte Hardware oder Engines eingesetzt werden. Zum Beispiel Physikengines oder Beschleuniger, z.B. um die Massenanziehung bei dem GSA zu berechnen oder Grafikprozessoren, um parallele Berechnungen schneller ausführen zu können, oder es können DSP Chips für unscharfe Operationen genutzt werden.

Dadurch, dass ein Zugriff nicht nur auf das Abrufen von Informationen beschränkt ist, können bekannte Analysemethoden eingesetzt werden, auch aufgrund des Schemas, z.B. zusammen mit weiteren Daten. Solche Analysen können beispielsweise mit Data Mining Algorithmen, wie z.B. A* durchgeführt werden. Ein weiteres Beispiel ist es, Daten aus Zugriffsdokumenten 140 oder Daten aus der Speichereinheit 110 in Kombination mit einem oder mehreren Schemata zu nutzen. So kann beispielsweise identifiziert werden, welche Produkte die Freunde des Benutzers als letztes gekauft haben, die auch im Schema 120 mit Produkten in Verbindung gebracht werden, die den benutzerinteressierten Produkten ähnlich sind. Zum Beispiel interessierte sich ein Benutzer für Skihelme und Freunde von ihm haben in einem Skigebiet Urlaub gemacht. Somit könnte diese Information für das Bestimmen passender Werbung für den Benutzer verwendet werden.

Solche Analysen können wiederum verwendet werden, um zu einem oder mehreren Schemata 120 weitere Informationen hinzuzufügen. Z.B. können dadurch neue Knoten oder Kanten erzeugt und gelöscht werden, oder auch bestehende verändert werden.

Auch können weitere Erkenntnisse aus der Wahrscheinlichkeitstheorie in einem So-ad-tec System 100 benutzt werden z.B. die Clusteranalyse. Diese kann z.B. dazu genutzt werden, Schemata oder weitere Daten in Cluster aufzuteilen. Oder Benutzer können aufgrund ihrer Interessen in sogenannte Benutzercluster klassifiziert werden.

Aufgrund von verschiedenen Benutzerclustern können auch Verbindungen im Schema anders strukturiert werden. Somit können sich z.B. Informationen im Schema oder der Speichereinheit 110 über die Benutzercluster hinterlegen lassen. Dies könnte unter Anderem dazu genutzt werden, um für verschiedene Benutzer, je nach Clustermitgliedschaft, verschiedene Wege/Kanten verschieden zu gewichten. Die Hauptidee dahinter ist, dass es immer Benutzer geben wird, die anderen zumindest teilweise, sehr ähnlich sind. Durch Clusteranalysen kann man diese gruppieren und das dadurch erzeugte Wissen, bei zumindest einer weiteren Operation, nutzen.

Eine weitere Form der Analyse ist der Einsatz von einem PSO Algorithmus. Dieser kann auf Benutzerdaten in Kombination mit einem oder mehreren Schemata und weiteren Daten angewendet werden. Beispielsweise können zu den Benutzerdaten auch Tags gehören. Tags können hierbei Personen auf Bildern oder auch Produkte auf Bildern markieren. Dadurch kann untersucht werden, welche Benutzer Teil eines Schwarms sind. Beispielsweise aufgrund von getaggten Produkten, die mit Benutzern zusammen auf Bildern zu sehen sind. Die Assoziation von Benutzern zu gewissen Tags auf Bildern können als Partikelbewegungen verstanden werden. Es kann aus dieser oder ähnlichen Erkenntnissen eine Analyse vorgenommen werden um festzustellen, welche Benutzer Mitglied eines Schwarms sind, und bei welchen Mitgliedern Produkte als erstes auftauchen. Durch das Schema ist es auch möglich, Kategorien oder Zusammenhänge von Produkten dabei zu berücksichtigen. Grafisch veranschaulicht ist dies wie folgt zu verstehen: Das Schema und weitere Daten im So-ad-tec System 100 stellen das Land dar, über das ein Vogelschwarm fliegt. Die einzelnen Vögel stellen die Benutzer dar. Diese bewegen sich über Zeit in einem mehrdimensionalen Raum, in dem sie verschiedene Koordinaten besitzen. Diese Koordinaten sind durch das Schema und weitere Daten definiert. Nun kann es sein, dass einzelne Vögel/Benutzer zuerst gewisse Koordinaten einnehmen. Beispielsweise durch Assoziationen mit einem bestimmten Ort, wie einem Skigebiet. Zu diesen Koordinaten folgen dann, nach einer gewissen Zeit, andere Benutzer. Oder Benutzer "umfliegen" bestimmte Punkte in einem Schema und andere folgen.

Aufgrund dieser Sichtweise sind auch weitere Analysen anwendbar. Zum Beispiel, dass ein großer Schwarm aus mehreren kleinen besteht. Oder auch um Prognosen zu erstellen.

Auch kann ein So-ad-tec System 100 dafür genutzt werden, auf Benutzer speziell angepasste Anzeigen zu erzeugen. Dabei kann z.B. eines oder mehrere Schemata, Benutzerdaten als auch Inhaltsdaten genutzt werden. Ebenso wie auf Benutzer speziell angepasste Anzeigen, ist es auch möglich, Anzeigen aufgrund des Schemas zu erzeugen, die auf den Kontext angepasst sind.

Analysen im So-ad-tec System 100 können zudem dazu dienen, z.B. Meinungsmacher aufzudecken, oder festzustellen, welche Benutzer gute Testobjekte dafür sind ob Werbung angenommen wird. Dies kann zum Beispiel durch eine zuvor erwähnte Analyse im Vergleich mit dem PSO Algorithmus geschehen. Dabei könnte zum Beispiel auch das Beachten der Werbung durch Benutzer, zum Beispiel durch deren Auswahl, Teil der Landkarte und der Vogeldaten sein.

Zudem kann ein So-ad-tec System 100 dazu genutzt werden, direkt in das Schema zu schreiben. Beispielsweise können dadurch direkt neue Knoten hinzugefügt werden oder bestehende geändert werden. Ein weiteres Beispiel für das Schreiben von Daten ist das Hinzufügen von Daten in die Speichereinheit 110. Unter Schreiben wird oftmals auch das Ändern, sowie auch das Löschen von bereits bestehenden Daten im Schema oder/und der Speichereinheit 110 verstanden.

Besonders bevorzugt enthält ein So-ad-tec System 100 Mittel, die Werbende bei dem Hinzufügen von Werbung unterstützen. Zum Beispiel kann ein So-ad-tec System 100 über eine Analyse-Einheit verfügen, die Dokumente 10 von Werbenden oder anderen Quellen entgegen nimmt und deren Werbung, aufgrund der Analyse, in eines oder mehrere Schemata 120 einstrukturiert/einpftegt. Bei dieser Analyse können auch weitere Quellen, oder Quellsysteme benutzt werden. Ein Strukturieren kann zum Beispiel eine Klassifikation zu Kategorien sein, in der die Werbung erscheinen soll, oder auch das Erzeugen von neuen Knoten oder Kanten im Schema 120. Bei einem solchen Vorgang können optimalerweise Produktdatenblätter oder auch Informationen, die von Benutzern erzeugt wurden, genutzt werden. Aufgrund von Produktdatenblättern können zum Beispiel auch ähnliche Kategorien aufgedeckt werden. Es ist auch möglich, dass die Analyse von Bildern oder weiteren Mediendokumenten genutzt wird, um den Werbenden zu unterstützen, seine Werbung bestmöglich einzuordnen. Eine solche Unterstützung kann auch semiautomatisch, z.B. mit Interaktionen des Werbenden, erfolgen. Natürlich ist es auch möglich, dass Werbende direkt Zugriff auf zumindest ein Schema erhalten können. Werbende können durch die Schreiboperationen auch Dinge ändern und Gebote hinzufügen.

Über Schreiboperationen können desweiteren die zuvor beschriebenen, auch weitere Funktionen zu einem So-ad-tec System 100 hinzugefügt werden, zum Beispiel weiterer Programmcode, oder auch Rückschlussregeln.

Besonders bevorzugt enthält ein solches System desweiteren Mittel, die es ermöglichen festzustellen, wie oft welche Werbungen gesehen oder positiv wahrgenommen wurden. Durch weitere Mittel kann dies zum Beispiel zu Abrechnungszwecken benutzt werden. Systeme, die die Verwaltung von Werbekonten und das Verfolgen von Kampagnen durchführen, sind aus dem Stand der Technik bekannt und können in Kombination mit einem So-ad-tec System 100 eingesetzt werden.

Aufgrund seiner Fähigkeiten kann ein So-ad-tec System 100 dazu verwendet werden, Werbung in/zu Dokumenten 10 im Internet, wie zum Beispiel Webseiten, Videos oder Fotos einzubinden. Dabei können zudem alle Möglichkeiten genutzt werden, die bei weiteren Technologien im Internet, auch auf Mobiltelefonen/Smartphones eingesetzt werden.

Dies können zum Beispiel Listen von Werbung sein. Diese können auch Texte, Bilder, Videos, oder Teile derer durch Hyperlinks hinterlegt werden, die auf Werbung zu assoziierten oder direkt verweisen. Werbung kann dabei nach Relevanz sortiert werden.

Sofern Werbung Benutzern angezeigt wird, beispielsweise in Hypertextdokumenten, ist es auch möglich, dass beim Überfahren von mit Werbung assoziierten/verweisenden Informationen wie Vorschaubilder, z.B. von der Zielwebsite oder Bilder angezeigt werden. Beispielsweise können dazu Mouseover-Effekte eingesetzt werden.

Bei einem Klick/Auswahl von Werbung kann dies an das So-ad-tec System 100 übermittelt werden. Dies kann z.B. dazu genutzt werden, um Informationen in Schemata einzutragen, oder auch um das aktuelle Gebot vom Konto des Werbenden abzubuchen.

Es ist desweiteren möglich, dass nicht nur Buchungen auf dem Konto des Werbenden vorgenommen werden, sondern dass auch Buchungen aufgrund weiterer Informationen, z.B. vom Betreiber einer Website vorgenommen werden.

Fig. 10 zeigt hierzu verschiedene Möglichkeiten, wie Werbung auf einem Klienten/Konsumenten 920 angezeigt oder ausgeliefert werden kann. Zum einen könnte der Klient 920 direkt von einer Datenbasis 10 Informationen abrufen. In dieser könnte schon zuvor Werbung hinzugefügt worden sein. Oder der Klient 920 ruft Werbung, aufgrund einer Erweiterung 910, zum Beispiel durch ein Plugin, Javascript, Silverlight, Flash oder ähnliche Technologien ab. Dabei ist es auch möglich, die Erweiterung 910 dynamisch in den Klient 920 zu laden, wie z.B. durch ein Computernetzwerk. Dazu könnte ein Verweis auf ein Script in einem Dokument 10 vorhanden sein. Realisierungen ähnlicher Art mit diesem Systemaufbau sind auch dem Stand der Technik bekannt und können an dieser Stelle eingesetzt werden.

Ein So-ad-tec System 100 kann dabei mit anderen Technologien, Apparaten oder Verfahren kombiniert werden. Beispielsweise mit US 2008/0126226. Zusätzlich zu bekannten Anzeigemöglichkeiten, ist es aber auch möglich, auch Werbung in Bilder oder Videos zu integrieren, die auch durch den Benutzer ausgewählt und nicht nur angezeigt werden können. Dies kann beispielsweise durch das Nutzen von getaggten Bereichen und/oder dem Hinzufügen von Hyperlinks zu diesen oder auch durch das Nutzen von US 2008/0126226 geschehen.

Ein weiterer Vorteil eines So-ad-tec Systems 100 ist, dass nicht wie in US 2008/0126226 gezeigt nur Werbung hinzugefügt werden kann, sondern auch passendere Werbung ausgewählt werden kann, die dann letztendlich durch das Verfahren eingebunden werden kann.

Über das Einblenden von Werbung kann dabei auch Benutzerfeedback übermittelt werden. Zum Beispiel, wie lange ein Benutzer die Werbung gesehen hat, bevor er sie angeklickt hat oder auch Eigenschaften in dessen Profil.

Eine weitere Möglichkeit wäre es, ein So-ad-tec System 100 in Kombination mit einer Suchmaschine zu benutzen. Dabei können Suchbegriffe als Zugriffsdokumente 140 aufgefasst werden. Eine weitere Möglichkeit ist es, die ersten Websites des Ergebnisses einer Suche als Zugriffsdokumente 140 zu verwenden und aufgrund deren Inhalts die Werbung zu bestimmen und anzuzeigen.

Eine weitere Möglichkeit ist es, ein So-ad-tec System 100 zum Bestimmen passender Werbung in Videos, zum Beispiel auf YouTube zu verwenden. Ferner ist es damit möglich, Werbung für E-Mails zu bestimmen. Ein weiterer Anwendungsfall ist es, Werbung aufgrund von Kurznachrichten oder Videostreams, auch Lifestreams zu verwenden. Besonders bevorzugt können hier auch mobile Klienten 920 genutzt werden, wobei deren Position, die Position des Lifestreams, als auch Kontextdaten und weitere Daten genutzt werden können, um optimale Werbung zu bestimmen. Eine besondere Optimierung kann hierbei eingesetzt werden, indem auch die Benutzerdaten von mehreren Klienten 920 beachtet werden. Die Werbung kann auch aufgrund von weiteren Eigenschaften des Klienten 920 angepasst werden. Zum Beispiel durch dessen Auflösung.

Ein weiterer Einsatzort sind Social Networks, so wie Orkut, Studivz, Xing und Facebook. Hierbei kann durch die Erfindung erstmals kontextbezogen, benutzerorientiert und strukturiert geworben werden. Durch die Erfindung ist es auch möglich, aufgrund von Tags zu werben.

Besonders vorteilhaft kann auch der Einsatz zur Kombination von Benutzerdaten, Werbung und Kontextdaten sein. Zum Beispiel ist ein Benutzer auf der Suche nach einer Kamera. Bei Bildern sind z.B. durch Exif Daten hinterlegt, die angeben mit welchem Kameramodell ein Bild aufgenommen wurde. Schaut sich der Benutzer Bilder und Bilderalben an, könnte zu den Bildern Werbung für das entsprechende Kameramodell, mit dem das Bild aufgenommen wurde, angezeigt werden.

Besonders bevorzugt kann ein So-ad-tec System 100 auch genutzt werden, damit Benutzer Produkte taggen können. Hierbei können Benutzer Dokumente 10 oder Teile derer mit Daten aus einem So-ad-tec System 100 assoziierten. Beispielsweise kann dadurch ein Bereich auf einem Bild markiert werden und mit einem bestimmten Produkt oder Kategorien assoziiert werden.

Somit ist es möglich, dass Produkte in Bildern "verlinkt" werden. In Fig. 11 ist ein Beispiel hierfür zu sehen. Dabei zeigt 1101 ein Dokument 10. Dieses Dokument 10 enthält ein Bild 1102 oder eine andere Medienform, wie ein Video, das verschiedene Tags enthält. Des Weiteren sind exemplarisch durch 1103 Werbeanzeigen dargestellt. Durch das So-ad-tec System 100 ist es nun möglich, dass die Werbeanzeigen 1103 aufgrund der Tags und weiterer Dokumenteninhalte ausgewählt und angezeigt werden. Des Weiteren ist es möglich, dass Werbung bei dem Überfahren der Bereiche die mit Tags assoziiert sind, z.B. Tag 1- 8, angezeigt wird. In Fig. 11 ist auch zu sehen, dass Tags sich überlappen können, wie Tag 1 und Tag 3. Oder dass Bereiche durch mehrere Tags gekennzeichnet werden können, wie durch Tag 5 und Tag 8. Eine weitere Möglichkeit ist, dass Tags auch in sich vorkommen, wie Tag 7 und 6.

Fig. 11 ist dabei nicht nur als Beispiel für ein Bild zu sehen, sondern kann vielmehr 1102 als Beispiel für Videos oder Videostreams oder andere Arten von Dokumenten 10 dienen, zum Beispiel eingebettete Dokumente 10.

Eine weitere Möglichkeit ist nicht gezeigt, aber so können auch Tags durch andere Tags getaggt werden. Dadurch ist es zusätzlich möglich, mehrere Tags gleichzeitig zu taggen. Auch ist es möglich, Beziehungen auszudrücken. Zum Beispiel eine markierte Person "trägt" Kleidung der Firma XY. In diesem Beispiel würde die Person mit einem Produkt assoziiert werden und "trägt" würde als Prädikat dienen. Man beachte aber hierbei, dass solche Assoziationen auch ohne benannte Prädikate möglich sind, z.B. Person "TagBeziehung" Kleidung, wobei die Beziehung hier allgemein auch mit dem Prädikat "besitzt Eigenschaft", u.Ä. interpretiert werden könnte.

Wie zuvor beschrieben kann jeder Knoten als Prädikat dienen. Beispiele für Prädikate können z.B. sein: besitzt, trägt, mag, verehrt, gekauft in, hat gekostet, hört, isst, fährt, Teil von, usw.

Bevorzugterweise besitzt ein So-ad-tec System 100 Analysatoren, um Produkte in Dokumenten 10 zu erkennen, wie z.B. Personen oder Gegenstände in Bild- und/oder Videoinhalten.

Optimalerweise können diese automatisch Tags erzeugen und Inhalte von Dokumenten 10 mit Knoten oder Kanten im Schema assoziierten und offensichtlich oder nur intern dadurch Verweise oder andere Markierungen, z.B. in der Form von Tags, erzeugen. Besonders bevorzugt werden diese Analysatoren zusammen mit Tags, die von Menschen gesetzt wurden, als Hybridsystem genutzt. Beispielsweise ist ein Tag nicht eine genaue Umrahmung eines Gegenstandes in einem Bild oder Video, sondern oftmals zu groß, zu klein, oder er besitzt die falsche Form. Aufgrund von Bildanalysatoren kann dann das eigentlich gewünschte Produkt bestimmt werden, das durch einen Tag nur grob anvisiert wurde. Es können auch Analysatoren eingesetzt werden, um weitere Dinge zu erkennen. Zum Beispiel durch Regeln, wie wenn auf einem Bild oder allen Bildern in einem Bilderalbum viel weiß zu sehen ist und darauf Benutzer verlinkt sind. Aufgrund derer Benutzerdaten, dass deren Hobby Ski oder Snowboard fahren ist, und das Aufnahmedatum im Winter liegt, wird erkannt, dass das Bild oder auch das ganze Album, beim Skifahren entstanden ist. Aufgrund solcher oder ähnlicher Regeln lassen sich weitere Dinge erkennen. Dabei kann auch dies wieder im Zusammenspiel mit dem Benutzer geschehen. Dieser könnte dann wahrscheinlich zutreffende Inhalte präsentiert bekommen und dann entscheiden, ob die Analyse korrekt war. Dabei kann er auch Vorschlagslisten zur Auswahl bekommen, zum Beispiel eine Liste von Skigebieten, oder der wahrscheinlichsten Bildinhalte.

Aufgrund von bewegten Objekten in Videos kann ein So-ad-tec System 100 auch über die Fähigkeit verfügen, diese "verlinken" und taggen zu können. Dabei kann zum Beispiel durch ein Tag bei einem bestimmten Bild/Frame eines Videos ein Objekt markiert werden. Aufgrund von Analysen ist es möglich, das konkrete Objekt zu erkennen und dieses auch bei den nächsten Frames des Videos automatisiert zu verfolgen. Zum Beispiel durch den PSO Algorithmus, der eingesetzt werden kann, um Objekte in Videos zu verfolgen.

Ergebnisse von Analysatoren oder Tags von Benutzern können, aufgrund eines neuen CAPTCHA (http://de.wikipedia.org/wiki/CAPTCHA) Systems oder Verfahrens im weiteren auch SCAPTCHA System 1300 genannt, welches auch unabhängig von einem So-ad-tec System 100 realisiert werden kann, überprüft werden. Ein solches System funktioniert nicht, wie z.B. aus dem Stand der Technik bekannt, aus dem Erkennen von Wörtern, sondern darin, Bereiche in Bildern zu taggen oder zu überprüfen, ob der Inhalt eines Tags wirklich dessen Bedeutung entspricht.. In einer Ausführungsform weist ein SCAPTCHA System 1300 daher auf:
a. Einen Zugriffsentscheider, um zumindest eine Entscheidung, über zumindest einen Zugriff, anhand der Antwort zumindest eines Rätsel zu fällen;
b. wobei die LösungBeantwortung des Rätsels dazu genutzt werden kann, um Informationen zu gewinnen und solche Informationen zumindest einem weiteren Zweck dienen.

Dieser Zweck kann z.B. sein: Identifikation oder/und Klassifikation oder/und Themenzuordnung von Inhalten von Dokumenten oder Dokumententeilen, Zuordnung oder/und Erkennen von Objekten, Verifikation oder/und Bewertung von Antworten anderer Benutzer oder Rätsel oder deren Instanzen, Bildung, Bewertung und/oder Anpassung von Kategorien oder/und deren Beziehungen oder/und zumindest eines Kategoriesystems, erzeugen, ändern oder/und anpassen eines Schemas und/oder dessen Struktur, bestimmen von Beziehungen oder/und Beziehungstypen, wobei solche Beziehungen auch durch ganze Sätze und/oder andere Beziehungen oder Objekte beschrieben werden können, einordnen von Informationen in zumindest ein Schema oder Teile dessen, Training von zumindest einem Erkennungsmechanismus oder erkennen oder das Anwenden von Regeln, die der Mensch benutzt.

Dies kann wie folgt durchgeführt werden. Ein mit einem Tag versehener Bildausschnitt wird einem Benutzer gezeigt mit der Frage, was auf dem Bild zu sehen ist. Entspricht die Eingabe des Benutzers dem Tag, so scheint der Benutzer ein Mensch zu sein. Dabei können auch weitere erweiterte Regeln genutzt werden. Beispielsweise können die Begriffe zu den Bildern auch nach einem ähnlichen System wie im reCAPTCHA Verfahren oder System bestimmt werden, mit dem Unterschied, dass es sich um Bildbereiche und nicht um Text handelt. Es kann bei der Begriffsabfrage auch ein Schema 120 verwendet werden, beispielsweise um festzustellen, ob der Begriff des Benutzers eine Unterkategorie oder Oberkategorie des Begriffs des Tags ist.

Eine weitere Möglichkeit ist, dass Produkte auf einem Bild von einem Benutzer markiert werden sollen. Entspricht, bzw. ist die Umrandung des Benutzers ähnlich der anderer Benutzer, so scheint der Benutzer ein Mensch zu sein. Somit ist das neue an diesem System, dass nicht Wörter, sondern komplexere Strukturen, wie z.B. Medieninhalte verwendet werden, um Mensch und Maschine zu unterscheiden und diese Inhalte als Zusatz noch zusätzlich klassifizieren zu können.

Bei dieser Unterscheidung kann es, wie zuvor beschrieben möglich sein, dass eines oder mehrere in diesem Dokument 10 beschriebene Schemata 120 verwendet werden. Ein weiteres Beispiel dafür ist, dass dem Benutzer ein konkretes Produkt gezeigt wird, z.B. ein iPhone, er aber eine von dessen Kategorien als Tag spezifiziert, z.B. Smartphone oder Handy. Durch das Schema kann trotzdem erfasst werden, das es sich um einen Menschen handelt. Desweiteren ist es möglich, dass durch die Eingaben von Benutzern auch Gewichtungen im Schema 120 verwendet werden. Bei der Auswertung kann auch darauf geachtet werden, ob andere Benutzer gleich dem jetzigen Benutzer geantwortet haben. Die Antworthäufigkeit und weitere Faktoren, wie z.B. die IP Adresse können somit bei der Bewertung, ob ein Mensch versucht die Aufgabe zu lösen, einfließen.

Grundlegend kann das SCAPTCHA System 1300 auch für Videos verwendet werden. Oder auch durch das Vorspielen von Audiodateien. Es ist sogar möglich, kleine Texte vorzugeben und Benutzer aufzufordern, einen Tag dafür zu vergeben. Die Ergebnisse davon können zum Beispiel auch dazu verwendet werden, die Ergebnisse von Analysatoren zu verifizieren oder die Analysatoren zu trainieren.

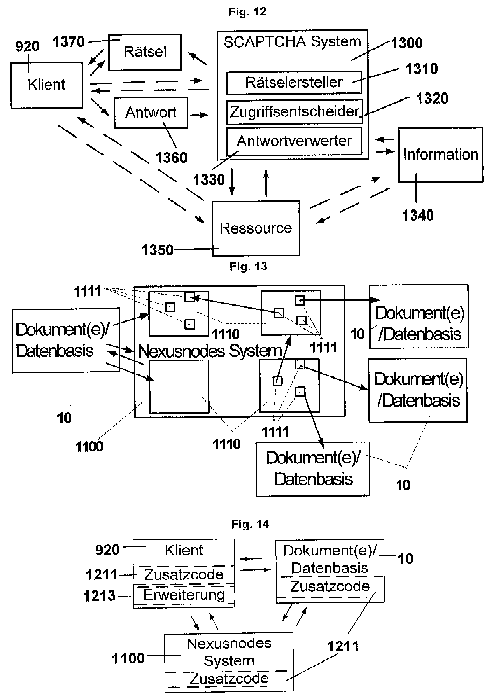

Fig. 12 zeigt einen möglichen Aufbau für ein SCAPTCHA System 1300. Dieses erstellt aufgrund von Informationen 1340 ein Rätsel 1370, um über einen Zugriff zu entscheiden. Diese Informationen 1340 können auch Ressourcen 1350 sein oder sich auf solche beziehen. Beispielsweise könnte eine solche Ressource 1350 und somit eine Information sich auf den aktuellen Kontext beziehen, damit das Rätsel 1370 zu diesem passt. Der Klient 920 erzeugt eine Antwort 1360 die das SCAPTCHA System 1300 erhält. Dies enthält Mittel, wie beispielsweise einen Zugriffsentscheider 1320 der bestimmt, ob auf die Ressource 1350 zugegriffen werden darf. Dabei besitzt er auch optionalerweise Mittel, um die Antwort 1360 für weitere Zwecke als zur reinen Zugriffsentscheidung zu verwerten. Zum Beispiel kann die Antwort auch zum Erzeugen eines oder mehrerer neuen Rätsel 1370 genutzt werden. Diese kann auch dazu genutzt werden, um über die Antwort 1360 von weiteren Rätseln 1370 zu entscheiden. Zudem sind natürlich weitere in diesem Dokument 10 beschriebene Verwertungen, wie Schemaerstellung oder Objekterkennung möglich.

Aufgrund dieses SCAPTCHA Systems 1300 und der Eingaben der Benutzer dabei, ist es auch möglich, ein Schema, aufgrund der Eingaben der Benutzer, aufzubauen. Dies hat den Vorteil, dass die Benutzer Stück für Stück immer wieder neue Informationen zum Schema hinzufügen und das Schema so strukturiert wird, wie die meisten Benutzer die Realität wahrnehmen. Es ist aber auch möglich, dass für verschiedene Benutzer oder Benutzergruppen verschiedene Schemata erstellt werden. Ein solches System kann desweiteren sämtliche in diesem Dokument offenbarten und andere, für die Aufgabe passende und/oder wichtige Mittel verwenden.

Aufgrund von Tags, auch durch eine oder mehrere Eingaben eines SCAPTCHA Systems 1300, können Knoten in einem oder mehreren Schemata 120 oder auch Kanten anders gewichtet werden. Zum Beispiel durch zuvor vorgestellte Möglichkeiten beim Taggen, wie z.B. das Erfassen der Häufigkeit von Begriffen. Eine weitere Möglichkeit ist, dass Tags, die im gleichen Dokument 10 vorkommen, auch zu neuen Kanten und/oder Knoten in einem oder mehreren Schemata 120 führen können.

Auch ist es möglich, aufgrund von Tags zu lernen. Beispielsweise, an welchen Orten ein Produkt vorkommen kann. Es könnte ein Produkt und ein Ort bzw. Ortstyp auf einem Bild markiert sein. Daher ist bekannt, dass ein Produkt an diesem Ort vorkommen kann. Dadurch, wie oft diese Tagkombination oder auch ein Bild, das mit Geodaten und Tags versehen ist, vorkommt, kann in das Schema Information eingetragen werden. Hier könnte z.B. zusätzlich auf Basis der Geodaten ein Rückschluss über den Ortstyp gebildet werden. Somit kann beispielsweise die Wahrscheinlichkeit bestimmt werden, dass ein Produkt an Orten dieses erkannten Typs oder an den bestimmten Gedodaten vorkommt. Dies kann weiter verwendet werden, zum Beispiel, zum Anpassen von Analysatoren. Oder auch, dass Benutzern nur wahrscheinlich vorkommende Produkte beim Taggen vorgeschlagen werden. Man beachte zudem, dass Geodaten, wie auch stets einen Umkreis zu Koordinaten auf der Erde beschreiben können und damit einen Bereich markieren können.

Auch kann ein So-ad-tec System 100 über eine OCR Einheit verfügen. Dies kann dazu dienen, digitalisierte Belege, z.B. in der Form von PDFs, Bildern, Videos oder Belegen, wie zum Beispiel Kassenzettel zu verarbeiten. Dabei können auch komplexere Operationen durchgeführt werden. Zum Beispiel könnte ein Foto eines Skipasses dazu führen, dass weitere Informationen, wie zum Beispiel eine Liftliste abgerufen werden.

Dies kann zum Beispiel dazu genutzt werden, dass die Kleidung der Benutzer erkannt wird, und aufgrund dieser Werbung eingeblendet werden kann. Auch kann dies dazu dienen, dass Benutzer beim Taggen ihrer Bilder Vorschläge für Tags, aufgrund der Belege, erhalten. Auch kann so automatisch die Bezugsquelle für Produkte bestimmt werden.

Aufgrund von Tags können auch Analysen durchgeführt werden. Zum Beispiel zur Produktverteilung auf Bildern, auch in Kombination mit Benutzerdaten und Schemata 120. Z.B. wie viele Freunde eines Benutzers Ski fahren waren, und ob dieser in der Vergangenheit auch auf Skibildern markiert worden ist, um diesen dann zu bewerben, mit ähnlichen Slogans wie: "5 deiner Freunde waren in den letzten Wochen Ski fahren, heute supergünstig, Pitztal buchen." Dabei könnte zusätzlich erwähnt werden, welche Freunde Skifahren waren. Natürlich sind auch weitere Analysen denkbar. Analog, wie auf Skifahren, lassen sich natürlich sämtliche Beispiele auf andere Bereiche übertragen. Beispielsweise Sommerurlaub, oder auch das Benutzen von Produkten, wie z.B.:"X deiner Freunde haben ein Dell Notebook/IPhone...".

Durch die zuvor beschriebenen Funktionen ist es möglich, die komplette Kleidung oder andere Produkte von Personen zuzuordnen/zu "verlinken". Dies kann dazu benutzt werden Werbung, aufgrund von Produkten, die in Bildern oder Videos zu sehen sind, einzublenden. Dazu können auch noch Standortinformationen und Informationen über den Erwerb angezeigt oder genutzt werden. Zum Beispiel ist somit folgendes oder ähnliches möglich, wenn eine Jeans, die eine Person trägt, getaggt wurde: Diese Jeans ist bei einem Geschäft in der Nähe des "umworbenen" für XX € zu kaufen. Oder: Die Jeans wurde für XX € in Geschäft XY gekauft. Hierbei sind natürlich auch generalisierte Aussagen möglich, bei denen einfach nur auf den Hersteller verwiesen wird. Bevorzugterweise werden bei solchen Werbemethoden die durch Fig.11 und Fig. 10 vorgestellten Möglichkeiten benutzt, z.B. die Werbung zusätzlich oder durch Mouseover Effekte zu präsentieren.

Eine weitere Möglichkeit ein So-ad-tec System 100 zu benutzen, ist das Werben mit benutzererstelltem Inhalt. Dadurch, dass Produkte auf Bildern getaggt werden können ist es möglich, auch diese Bilder zum Bewerben von Produkten zu verwenden und diese zum Beispiel in/zu anderen Dokumenten 10 als Werbung einzublenden. Dies kann auch noch benutzerzentriert optimiert sein, wie z.B. einem Benutzer wird nicht die Werbung eines Produktes gezeigt, sondern besser ein Freund des Benutzers, wie dieser das Produkt trägt/nutzt/betrachtet/usw. Zum Beispiel sieht man, wie ein Bekannter einen bestimmten Pullover trägt oder in einem zu bewerbenden Skigebiet Urlaub macht. Dies macht Werbung authentischer und anziehender für Umworbene.

Im Zusammenspiel mit einem Hyperadapter lassen sich die Ausführungen in Kombination mit diesem nutzen. Einerseits zur Analyse, zum Anderen, um Werbung in diesen integrieren zu können. Dies kann zum Beispiel darüber geschehen, dass Dimensionen/Klassen im Hyperadapter mit Kategorien oder anderen Knoten von einem So-ad-tec System 100 assoziiert werden.

Große Teile der Erfindung sind bisher dem Stand der Technik nicht bekannt. Diese Teile können insbesondere nicht nur für Werbung, sondern auch für weitere Dokumente 10 verwendet werden. Insbesondere im Technologiebereich von Wissensmanagement und der Suche, z.B. im Internet und im Bereich der künstlichen Intelligenz. Aber auch bei der Strukturierung von Information können viele Erkenntnisse angewendet werden. Zum Beispiel kann aufgrund seiner Komplexität ein solches Schema, gerade im Zusammenspiel mit Schwarmintelligenz in dieser Erfindung dazu benutzt werden, um Apparate oder Verfahren zu erstellen, die in diesen Bereichen vorteilhafte Verfahren oder Apparate ermöglichen. Auch kann das SCAPTCHA System 1300 und zugehörige Verfahren, als auch das nachfolgende Nexusnodes System 1100 vorteilhaft in diesen und weiteren Bereichen eingesetzt werden.

In Kombination mit einem So-ad-tec 100 oder SCAPTCHA 1300 kann auch ein Nexusnodes System 1100 genutzt werden. In einer Ausführungsform weist ein Nexusnodes System 1100 auf:
a. Zumindest eine Knotenverwaltungseinheit, die es ermöglicht, zumindest einen Knoten 1110 zu verwalten, der durch Verweise in Dokumenten 10 angesprochen werden kann;
b. Wobei ein Knoten 1110 auf eines oder mehrere Ziele verweisen kann, und ein Knoten 1110 die Funktion eines Stellvertreters für weitere Ressourcen haben kann.

Ein solches System kann dazu genutzt werden, bidirektionale Links zu ermöglichen oder auch Links von Webseiten oder anderen Dokumenten 10 auf noch nicht existierende Webseiten/Dokumente 10 zu setzen. Derzeit ist es nur in Wikipedia möglich, Links ins "Leere" zu setzen. Ein Nexusnodes System 1100 stellt die gleiche Funktionalität für alle Webseiten/Dokumente 10 zur Verfügung. Desweiteren ist es durch ein solches System möglich, dass ein Link sich auf mehrere Ziele bezieht und nicht nur auf eines.

Ein solches System besteht aus sogenannten Nexen 1110. Diese stellen Knoten 1110 dar, die unter anderem als Surrogat für weitere Ressourcen verwendet werden können, auch für Ressourcen, die erst in der Zukunft existieren werden. Solche Knoten 1110 sind z.B. über eine URL erreichbar. Dabei können "/" dazu genutzt werden, Hierarchien zu spezifizieren. Ein solcher Knoten kann zum Beispiel eine Webseite sein, die auf weitere Webseiten oder Nexen 1110 verweist. Auch ist es möglich, dass andere Dokumente 10 als Inhalte "in" einem solchen Knoten zu finden sind. Optionalerweise kann auch in einem Nexus gespeichert werden, was alles auf ihn verweist.

Dies kann ermöglicht werden, wie in Fig. 13 dargestellt. Dabei verweist ein Dokument 10, zum Beispiel eine Website, auf das Nexusnodes System 1100. Das Ziel eines solchen Verweises ist ein Nexus 1110 oder ein Ziel in einem Nexus, zum Beispiel 1110. Dies kann technisch zum Beispiel durch eine URL realisiert werden. Der Nexus 1110 oder dessen Elemente 1111 können selbst wiederum auf eine oder mehrere Ziele verweisen. Die Information aus dem Nexusnodes System 1100 können direkt in das Dokument 10 Integriert werden, oder auch auf den Klienten 920 geladen werden. Dies kann beispielsweise durch JavaScript oder ähnliche Technologie geschehen. Dadurch kann ein Benutzer beispielsweise bei einer Auswahl, wie durch Klick auf den Verweis, zu dem Nexus 1110 eine Auswahl von Zielen/Verweisen im Nexus 1110 präsentiert bekommen. Dabei kann es auch sein, dass Ziele, die noch keine weiteren Ziele im Nexus 1110 haben, nicht klickbar/auswählbar sind. Eine weitere Möglichkeit ist, dass der Benutzer direkt auf den Verweis im Dokument 10 klickt/auswählt und dadurch auf dem konkret ausgewählten Nexus 1110 landet, wo er die möglichen Ziele auf die der Nexus 1110 verweist, wie weitere Nexen 1110, Elemente in diesen oder auch weitere Dokumente 10 sehen kann.

Ziele/Verweise eines/in einem Nexus 1110 zu hinterlegen ist durch Benutzer selbst oder weitere technische Apparate/Verfahren möglich, wie beispielsweise Suchmaschinen oder/und in der Kombination mit Tags in Dokumenten.

In Fig. 14 ist zu sehen, dass im Dokument 10 selbst Zusatzcode 1211 oder Verweise auf Code hinterlegt sind. Dies kann dazu führen, dass Zusatzcode 1211 vom Klient 920 geladen wird, wie z.B. den zuvor beschriebenen JavaScript Code. Dadurch erhält der Benutzer die Möglichkeit, Dokumente zu Nexen 1110 zugehörig zu markieren oder auch Nexen in einem Dokument 10 auswählen zu können. Durch Nexen 1110 kann nun auch aufgedeckt werden, welche Seiten auf eine bestimmte Seite verweisen.

Die Erweiterung 1213 des Klienten 920 kann z.B. durch das Laden von Zusatzcode 1211, oder auch durch ein Plug-In realisiert werden. Ein solches Plug-In kann natürlich auch einen weiteren Zusatzcode 1211 laden.

Eine besondere Anwendungsform eines solchen Nexusnodes Systems 1100 ist, dass Benutzer auch Ressourcen in der Realität als Knoten/Nexen 1110 oder diesen zugehörig eintragen können. Zum Beispiel kann ein Benutzer Gegenstände von sich fotografieren und in einem solchen System unter einem Nexus 1110 hinterlegen. Dadurch kann er zukünftig z.B. auf sein Auto verweisen. Es ist dabei z.B. auch, wie bei allen Nexen 1110, möglich, schon vorher auf den Nexus 1110 des Autos zu verweisen, ohne dass dieser explizit angelegt wurde. Wird dieser später "befüllt" so passen rückwirkend alle Verweise.

Nexen 1110 können optionalerweise auch versioniert sein. Desweiteren können Nexen 1110 auch Gültigkeitsdaten enthalten. Zum Beispiel befand sich ein Auto A von xx-yx im Besitz eines Benutzers, danach Auto B. Ein solches System kann nun, sofern der Benutzer auf sein Auto verweist, anhand von Daten feststellen, welches gemeint ist. Ebenso, wie für Versionen und Gültigkeitsdaten, ist dieses Vorgehen auch für weitere Eigenschaften anwendbar.

Ein weiteres Merkmal des Nexusnodes Systems 1100 ist die Eigenschaft, dass Verweise/Hyperlinks zu dem Nexnusnodes System 1100 nicht durch eine absolute URL gegeben werden müssen. Dies kann zum Beispiel durch eine speziell dafür angepasste Sprache sein. "#{my:car}", " #my:car" oder eine ähnliche Syntax könnte zum Beispiel bedeuten, dass das eigene Auto gemeint ist und automatisch auf den entsprechenden Knoten im Nexusnodes System 1100 verweisen. Durch eine solche Sprache ist es zum Beispiel möglich, automatisch aufzudecken, wer den Text geschrieben hat und somit mit "my" zu assoziierten. Dabei können noch weitere Namespaces vorkommen. Zum Beispiel Freundesnamen "#friendname:car" oder auch "#clothes:jeans:levis501" " oder weitere. Besonders bevorzugt sind solche Mittel natürlich für verschiedene Sprachen und Regionen besonders spezialisiert angepasst, damit Benutzer diese einfach erlernen und nutzen können. Dabei können auch solche verweisenden Konstrukte einen normalen Text erhalten, zum Beispiel, in dem dieser angegeben oder aufgedeckt wird und automatisch durch einen Hyperlink hinterlegt wird.

Beispiele für den Einsatz eines solchen Systems: I went with #{my:car} the {#loc:supermarket near palm beach}

Dieser Satz könnte nun durch ein Nexusnodes System 1100 automatisch auf die passenden Nexen und somit auch auf den Supermarkt und das Auto des Autors verweisen. Aufgrund dessen, dass viele Benutzer oftmals auf die gleichen Dinge verweisen wollen, kann ein solches System auch über Mittel zur Assistenz verfügen. Solche Assistenzmittel können z.B. Vorschlagslisten, ähnlich Google suggest einblenden, wenn ein Benutzer Verweise mit/über das Nexusnodes System 1100 erzeugen will.

Man beachte, dass die vorgeschlagene Syntax exemplarisch zu verstehen ist und Namespaces nicht zwingend notwendig sind. Ebenso kann eine Implementierung eines Nexusnodes Systems 1100 schon vorhandene ähnliche Systeme nutzen. Beispielsweise können Nexen 1110 für Hashtags, wie beispielsweise von Twitter angelegt werden. Dies ermöglicht es, dass Hashtags nicht nur Wörter markieren, sondern auch auf damit gewollt assoziierte Informationen verweisen können.

In den Nexen 1110, oder durch weitere Mittel im Nexusnodes System 1100, kann desweiteren gespeichert werden, über welche Verbindung, bzw. welches Dokument 10 Nexen 1110 beansprucht werden.

Aufgrund der Eigenschaften des Nexusnodes Systems 1100 können auch Strichcodes (z.B. http://de.wikipedia.org/wiki/2D-Barcode) für einzelne Nexen 1110 erzeugt werden. Diese können Benutzer dann beispielsweise ausdrucken und an ihre Gegenstände heften. Bei neuen Bildern können dann wieder die Gegenstände durch die Strichcodes erkannt und somit einfacher durch Programme oder andere Mittel analysiert und Nexen 1110 zugeordnet werden.

Eine weitere Besonderheit, über die ein solches System verfügen kann, ist die Möglichkeit, dass Verweise in einem solchen System gewichtet werden können. Zudem ist es möglich, dass durch die verschiedenen Verweise ein solches System, eines oder mehrere Schemata 120, die in diesem Dokument 10 vorgestellt wurden, abbildet. Dadurch können auch weitere in dieser Erfindung beschriebene Mittel in einem solchen Nexusnodes System 1100 eingesetzt werden. Des Weiteren können Werbungen durch Verweise oder Nexen 1110 eines solchen Systems mit Werbung assoziiert werden.

Desweiteren lässt sich ein Nexusnodes System 1100 auch mit einem Hyperadapter koppeln, oder zusammen verwenden. Insbesondere mit der YourWeb Variante.

## Patentansprüche

1. Ein So-ad-tec System (100) für den Zugriff auf Werbung und/oder damit assoziierte Informationen, die im So-ad-tec System (100) hinterlegt werden können, wobei das So-ad-tec System (100) aufweist:
a. Eine Zugriffseinheit (130), die dazu ausgebildet ist, zumindest einen Zugriff zu verarbeiten, wobei ein solcher Zugriff Mittel enthalten kann, die dazu dienen, auf Informationen zumindest eines Schemas (120) oder daraus ableitbaren Informationen oder das Schema (120) oder dessen Struktur selbst zuzugreifen;
b. wobei ein So-ad-tec System (100) dazu ausgebildet ist, Werbung und weitere damit assoziierte oder zugehörige Informationen, in zumindest einem Schema (120) zu verwalten.

2. Ein So-ad-tec System (100) nach Anspruch 1, wobei das So-ad-tec System (100) dazu ausgebildet ist, die im Zugriffsdokument (140) enthaltenen Mittel zu nutzen, um das Resultat (150) des Zugriffs zu verändern, wobei das Resultat (150) auch im So-ad-tec System (100) vorhandene Mittel sein können, die bei zumindest einem weiteren Zugriff genutzt werden.

3. Ein So-ad-tec System (100) nach einem der vorhergehenden Ansprüche, wobei das So-ad-tee System (100) dazu ausgebildet ist, im Zugriffsdokument (150) spezifizierte Mittel in einem internen Speicher (110) zu speichern und diese, bei zumindest einem weiteren Zugriff, verwenden zu können.

4. Ein So-ad-tec System (100) nach einem der vorhergehenden Ansprüche, wobei das So-ad-tec System (100) zumindest über ein Schema (120) verfügt, das zumindest eine Hierarchie enthält.

5. Ein So-ad-tec System (100) nach einem der vorhergehenden Ansprüche, wobei das So-ad-tec System (100) über zumindest ein Mittel verfügt, das es erleichtert, Produkte in Dokumcnten (10) zu markieren, wobei das eigentliche Markieren auch durch weitere, auch externe Mittel geschehen kann, und die Daten über die Markierungen im So-ad-tec System (100) oder in einem oder mehreren anderen Systemen gespeichert werden können.

6. Ein So-ad-tec System (100) nach einem der vorhergehenden Ansprüche, wobei das So-ad-tec System (100) Zugriffsdokumente (140) empfangen und verarbeiten kann, die Verweise auf Kontextdaten oder Kontextdatcn selbst enthalten und dazu genutzt werden, relevante Werbung, aufgrund dieser zu bestimmen.

7. Ein So-ad-tec System (100) nach Anspruch 6, wobei die Kontextdaten zumindest einen Tag oder/und andere durch Benutzer erzeugte Markierungen oder Zuordnungen, mit gcgebenenfalls zugehörigen Bewertungen oder auch mit anderen Eigenschaften, die Informationen über diese Zuordnungen oder Markierungen enthalten, die zum Durchführen des Zugriffs genutzt werden können, enthalten.

8. Ein S0-ad-tec System (100) nach einem der vorhergehenden Ansprüche, wobei das So-ad-tec System (100) Benutzerinformationen bei einem Zugriff berücksichtigen kann.

9. Ein So-ad-tec System (100) nach einem der vorhergehenden Ansprüche, wobei das So-ad-tec System (100) es ermöglicht, Kontextdaten und Benutzerdaten bei einem Zugriff zu berücksichtigen.

10. Ein So-ad-tec System (100) nach einem der vorhergehenden Ansprüche, wobei das So-ad-tec System (100) Reaktionen oder/und daraus resultierende Informationen von Benutzern speichern und diese bei zumindest einem weiteren Zugriff als zusätzliches Mittel dienen können, um das Resultat (150) zu erzeugen.

11. Ein So-ad-tec System (100) nach einem der vorhergehenden Ansprüche, wobei dieses dazu genutzt wird, um zumindest eine Werbeanzeige zumindest einem Benutzer zuzustel. len oder abrufbar zu machen.

12. Ein So-ad-tec System (100) nach einem der vorhergehenden Ansprüche, wobei das So-ad-tec System (100) auch dazu genutzt werden kann weitere oder/und alternative Daten als Werbung in einem Schema (120) zu strukturieren, wobei ein solches So-ad-tec System (100) zusätzlich folgendes aufweist:
a.) zumindest ein Schema (120), das durch verschiedene Mittel angepasst werden kann und Anpassungen durch in einem oder mehreren Zugriffsdokumenten (140) oder/und im So-ad-tec System (100) enthaltenen Mittel ausgelöst werden können;
b.) wobei Mittel zur Anpassung gegebenenfalls durch eines oder mehrere Zugriffsdokumente (140) pammetrisiert oder verändert werden können, und das Schema (120) bei zumindest einem weiteren Zugriff bettutzt wird.

13. Ein Verfahren für den Zugriff auf Werbung und/oder damit assoziierte Informationen, die im So-ad-tec System hinterlegt werden können, wobei das Verfahren die folgenden Schritte aufweist:
a. Verarbeiten zum indest eines Zugriffdokumentes (140), wobei das Zugriffsdokumcnt (140) Mittel, auch in der Form von Dokumenten (10), enthalten kann, die dazu dienen, auf Informationen eines Schemas (120) oder/und daraus ableitbaren Informationen oder das Schema (120) oder dessen Struktur zuzugreifen und ein solches Schema (120) auch ein Dokument sein kann;
b. wobei bei Schritt a. das Schema (120) Werbung und weitere damit assoziierte oder logisch zugehörige Informationen in zumindest einem Schema (120) enthalten kann.

14. Das Verfahren nach Anspruch 13, ferner aufweisend die Schritte des Empfangens von Informationen durch zumindest ein Zugriffsdokument (140) und der Rückgabe zumindest eines Resultates (150), wobei das Resultat (150) zumindest eine Information über Werbung enthält.

15. Ein Computerprogramm, das Instruktionen aufweist, um ein Verfahren, nach einem der vorhergehenden Ansprüche 13 -14, auszuführen.
